# EUROPÄISCHE PATENTANMELDUNG

(11) **EP 4 506 764 A1**
(43) Veröffentlichungstag der Anmeldung: **12.02.2025**
(21) Anmeldenummer: 24184343.2
(22) Anmeldetag: 25.06.2024
(51) Int. Cl.: G05B 9/02, G05B 19/418

(54) **VERFAHREN ZUM BETREIBEN EINER FERTIGUNGSANLAGE SOWIE FERTIGUNGSANLAGE**

(30) Priorität: 20.07.2023 DE 102023119243
(71) Anmelder: Eisenmann GmbH, 71032 Böblingen (DE)
(72) Erfinder: Haelke, Konstantin, 72070 Tübingen (DE); Meller, Jonas, 71032 Böblingen (DE)
(74) Vertreter: Ostertag & Partner Patentanwälte mbB

(57) **Zusammenfassung**

Die Erfindung betrifft ein Verfahren zum Betreiben einer Fertigungsanlage (10) zur Herstellung von Werkstücken (12), insbesondere von Fahrzeugen (14), welches die folgenden Schritte umfasst: Durchführen von Arbeitsschritten zur Herstellung der Werkstücke (12) an sich in verschiedenen Produktionsstadien befindenden Zwischenwerkstücken (26) in mehreren Arbeitszonen (24) der Fertigungsanlage (10); Fördern der Zwischenwerkstücke (26) durch die Arbeitszonen (24) mittels eines fahrerlosen Transportsystems (FTS; 30), das mehrere fahrerlose Transportwagen (32) umfasst, wobei jeder fahrerlose Transportwagen (32) eine Antriebseinrichtung (44), eine Steuereinheit (46), eine Sensoreinrichtung (48), ein Speichermodul (50) und eine Energieversorgungseinrichtung (52) mit sich führt, wobei die Sensoreinrichtung (48) ein den fahrerlosen Transportwagen (32) umgebendes Sensorfeld erzeugt; Koordinieren des Förderbetriebs der fahrerlosen Transportwagen (32) in der Fertigungsanlage (10) mittels eines Steuersystems (56), das hierfür Steuersignale an die Steuereinheiten (46) der fahrerlosen Transportwagen (32) sendet. Erfindungsgemäß werden die folgenden weiteren Schritte ausgeführt: Bereitstellen von für jede Arbeitszone (24) individuellen Soll-Betriebsdaten in den Speichermodulen (50) der fahrerlosen Transportwagen (32); Senden von für jede Arbeitszone (24) individuellen und kontinuierlichen Ist-Betriebssignalen an die jeweiligen Steuereinheiten (50) der fahrerlosen Transportwagen (32) durch eine Sicherheitssteuerung (74); Empfangen der Ist-Betriebssignale und Vergleichen der empfangenen Ist-Betriebssignale mit den in den Speichermodulen (50) bereitgestellten Soll-Betriebsdaten, wobei bei einer Abweichung zwischen einem für den Vergleich relevanten Teil des empfangenen Ist-Betriebssignals einer Arbeitszone (24) und einem für den Vergleich relevanten Teil des entsprechenden abgespeicherten Soll-Betriebswerts ein Sonderbetriebsmodus der fahrerlosen Transportwagen (32) in der entsprechenden Arbeitszone (24) ausgelöst wird. Ferner betrifft die Erfindung eine Fertigungsanlage (10), die Mittel zum Ausführen des oben genannten Betriebsverfahrens aufweist.

## Beschreibung

### HINTERGRUND DER ERFINDUNG

### 1. Gebiet der Erfindung

Die Erfindung betrifft ein Verfahren zum Betreiben einer Fertigungsanlage zur Herstellung von Werkstücken, insbesondere von Fahrzeugen, welches die folgenden Schritte umfasst:
a) Durchführen von Arbeitsschritten zur Herstellung der Werkstücke an sich in verschiedenen Produktionsstadien befindenden Zwischenwerkstücken in mehreren Arbeitszonen der Fertigungsanlage;
b) Fördern der Zwischenwerkstücke durch die Arbeitszonen mittels eines fahrerlosen Transportsystems (FTS), das mehrere fahrerlose Transportwagen umfasst, wobei jeder fahrerlose Transportwagen eine Antriebseinrichtung, eine Steuereinheit, eine Sensoreinrichtung, ein Speichermodul und eine Energieversorgungseinrichtung mit sich führt, wobei die Sensoreinrichtung ein den fahrerlosen Transportwagen umgebendes Sensorfeld erzeugt;
c) Koordinieren des Förderbetriebs der fahrerlosen Transportwagen in der Fertigungsanlage mittels eines Steuersystems, das hierfür Steuersignale an die Steuereinheiten der fahrerlosen Transportwagen sendet.

Außerdem betrifft die Erfindung eine Fertigungsanlage zur Herstellung von Werkstücken, insbesondere von Fahrzeugen, mit
a) mehreren Arbeitszonen, in denen zur Herstellung der Werkstücke erforderliche Arbeitsschritte an sich in verschiedenen Produktionsstadien befindenden Zwischenwerkstücken durchgeführt werden können;
b) einem fahrerlosen Transportsystem (FTS), das mehrere fahrerlose Transportwagen umfasst, mittels denen die Zwischenwerkstücke durch die Arbeitszonen förderbar sind, wobei jeder Transportwagen eine Antriebseinrichtung, eine Steuereinheit, eine Sensoreinrichtung, ein Speichermodul und eine Energieversorgungseinrichtung mit sich führt, wobei die Sensoreinrichtung ein den fahrerlosen Transportwagen umgebendes Sensorfeld erzeugen kann;
c) einem Steuersystem, das den Betrieb der fahrerlosen Transportwagen in der Fertigungsanlage koordinieren und das zu diesem Zweck Steuersignale an die Steuereinheiten der fahrerlosen Transportwagen senden kann.

### 2. Beschreibung des Standes der Technik

Die Erfindung wird im Weiteren beispielhaft im Zusammenhang mit Werkstücken in Form von Fahrzeugen, insbesondere in Form von Kraftfahrzeugen am Beispiel von Automobilen, beschrieben, die in einer Fertigungsanlage hergestellt werden.

Nachdem Fahrzeugkarosserien in einer Rohbauanlage aus Einzelteilen zusammengefügt wurden und in einer Korrosionsschutzanlage insbesondere durch eine kataphoretische Tauchlackierung einen Korrosionsschutz erhalten haben, werden sie vor dem Erreichen einer Endmontageanlage in einer Oberflächenbehandlungsanlage einer Oberflächenbehandlung unterzogen.

Zu den Arbeitsschritten in einer solchen Fertigungsanlage zählen sowohl Maßnahmen, bei denen aktiv auf die Zwischenwerkstücke eingewirkt wird oder diese verändert oder ergänzt werden, wie beispielsweise im Rohbau oder bei der Endmontage, bei einer Applikation von Material oder dem Trocknen der Fahrzeugkarosserien, als auch Maßnahmen, bei denen keine aktive Einwirkung auf die Zwischenwerkstücke erfolgt, wie beispielsweise ein Audit oder ein Abdunsten von Fahrzeugkarosserien.

Zwischenwerkstücke sind dabei alle Stadien des Werkstücks, die dieses auf seinem Herstellungsweg durchläuft.

Die verschiedenen Arbeitsschritte werden in einzelnen Arbeitszonen durchgeführt, die für die jeweiligen Arbeitsschritte entsprechend ausgebildet sind. Dabei halten sich immer mehrere fahrerlose Transportwagen, die Teil eines fahrerlosen Transportsystems (FTS) sind, in einer Arbeitszone auf, die ein Zwischenwerkstück durch die jeweilige Arbeitszone fördern.

Derartige fahrerlosen Transportwagen führen jeweils eine Antriebseinrichtung, eine Steuereinheit, eine Sensoreinrichtung, ein Speichermodul und eine Energieversorgungseinrichtung mit sich. Im Stand der Technik ist es üblich, dass die fahrerlosen Transportwagen eine gesonderte Befestigungseinrichtung mit sich führen, an welchen die Werkstücke jeweils befestigt werden können. Es sind darüber hinaus Lösungen bekannt, bei welchen die fahrerlosen Transportwagen jeweils eine Hub-/Senkeinrichtung mit sich führen, um die Werkstücke, die sie transportieren, auf ein anderes Niveau anheben und/oder absenken zu können.

Die Sensoreinrichtung erzeugt dabei ein die fahrerlosen Transportwagen jeweils umgebendes Sensorfeld, welches zur Hinderniserkennung der fahrerlosen Transportwagen dient. Die fahrerlosen Transportwagen weisen jeweils mehrere Räder auf, wodurch diese unabhängig von sonstiger Fördertechnik wie beispielsweise Förderschienen direkt auf dem Anlagenboden verfahren werden können.

Damit die einzelnen Arbeitsschritte in jeder Arbeitszone in reproduzierbarer Weise durchgeführt werden können, ist es eine Grundvoraussetzung, dass sich die verschiedenen fahrerlosen Transportwagen, die sich in einer bestimmten Arbeitszone befinden, in der gleichen Weise durch diese Arbeitszone hindurchbewegen. Bei fahrerlosen Transportwagen, welche ihrerseits in der Lage sind, das Zwischenwerkstück relativ zu einem Fahrwerk zu bewegen, beispielsweise abzusenken, anzuheben, zu drehen oder dergleichen, sind auch solche Bewegungen für alle Zwischenwerkstücke gleichermaßen festgelegt. Dieser Förderbetrieb der fahrerlosen Transportwagen wird durch ein Steuersystem koordiniert, das hierfür Steuersignale an Steuereinheiten, die von den fahrerlosen Transportwagen mit sich geführt werden.

Dieser festgelegte Bewegungsablauf der Zwischenwerkstücke definiert einen Standardbetriebsmodus des FTS für eine bestimmte Arbeitszone. Es gibt somit bei mehreren Arbeitszonen für jede Arbeitszone einen zonenspezifischen Standardbetriebsmodus für das FTS.

Es können Situationen aufkommen, in denen aber in einer bestimmten Arbeitszone von diesem Standardbetriebsmodus abgewichen werden muss. Ein besonders wichtiger Fall ist dabei eine Notsituation, die ein sofortiges Stillsetzten aller fahrerlosen Transportwagen, einen sogenannten Not-Halt, erfordert. Weitere denkbare Maßnahmen können auch eine Geschwindigkeitsveränderung, insbesondere in Form einer Geschwindigkeitsreduktion, oder eine Beschleunigungsveränderung, insbesondere in Form einer Beschleunigungsreduktion, oder gegebenenfalls eine Änderung der Förderrichtung der fahrerlosen Transportwagen sein.

Bei am Markt bekannten Anlagen gibt es hierfür in jeder Arbeitszone stationäre Notaus-Taster für einen Not-Halt, die von Anlagenpersonal manuell betätigt werden, wenn eine Notsituation erkannt wird, und dadurch ein Notsignal auslösen. Wenn das Steuersystem das Notsignal erkennt, wird der Not-Halt der fahrerlosen Transportwagen des FTS eingeleitet.

Bei diesen vom Markt bekannten Fertigungsanlagen wird das Notsignal in der Regel über zertifizierte Sicherheits-Funkkomponenten übertragen, die von Herstellern spezieller Sicherheits-Soft- und -Hardware angeboten werden und die vergleichsweise sicher gegen Angriffe von außen sind. Mit diesen Komponenten werden beispielsweise sogenannte Snarfing- oder Man-in-the-Middle-Angriffe, wie sie beispielsweise von W-LAN-Netzwerken bekannt sind, erschwert, die entweder zum Ziel haben, Daten abzugreifen, oder - was noch größeren Schaden bei den Anlagenbetreibern zur Folge haben kann - den Anlagenbetrieb zu stören oder lahmzulegen.

Nachteilig an dieser vom Markt bekannten Lösung ist aber, dass für diese zertifizierten Funkkomponenten anlagenweit kostspielige Hardware verbaut und gegebenenfalls eine spezielle Software hierfür bezogen werden muss.

Diese vom Markt bekannten Systeme haben weiterhin den Nachteil, dass sie statisch sind, d.h., dass alle fahrerlosen Transportwagen im sogenannten Sicherheitskreis integriert sein müssen. Somit führt ein Not-Halt bei diesen bekannten Anlagen stets zum Not-Halt der fahrerlosen Transportwagen der gesamten Fertigungsanlage, was jeden Not-Halt zu einem kostspieligen Ereignis für die Anlagenbetreiber macht.

### ZUSAMMENFASSUNG DER ERFINDUNG

Aufgabe der vorliegenden Erfindung ist es daher, ein Verfahren zum Betreiben einer Fertigungsanlage sowie eine Fertigungsanlage anzugeben, die dem oben beschriebenen Nachteil begegnen.

Bei einem wie oben beschriebenen Verfahren zum Betreiben einer Fertigungsanlage wird die oben genannten Aufgabe durch die folgenden Schritte gelöst:
d) Bereitstellen von für jede Arbeitszone individuellen Soll-Betriebsdaten in den Speichermodulen der fahrerlosen Transportwagen;
e) Senden von für jede Arbeitszone individuellen und kontinuierlichen Ist-Betriebssignalen an die jeweiligen Steuereinheiten der fahrerlosen Transportwagen durch eine Sicherheitssteuerung;
f) Empfangen der Ist-Betriebssignale und Vergleichen der empfangenen Ist-Betriebssignale mit den in den Speichermodulen bereitgestellten Soll-Betriebsdaten,
wobei
g) bei einer Abweichung zwischen einem zumindest für den Vergleich relevanten Teil des empfangenen Ist-Betriebssignals einer Arbeitszone und einem zumindest für den Vergleich relevanten Teil des entsprechenden abgespeicherten Soll-Betriebswerts ein Sonderbetriebsmodus der fahrerlosen Transportwagen in der entsprechenden Arbeitszone ausgelöst wird.

Die Soll-Betriebsdaten umfassen in der Regel mehrere Soll-Betriebswerte, können aber auch durch nur einen einzigen Betriebswert definiert sein. Gleiches gilt entsprechend für die Ist-Betriebssignale. Die Ist-Betriebssignale und die Soll-Betriebsdaten können auch in ihrer Gänze miteinander verglichen werden. Nachfolgend sind bevorzugte Ausführungen beschrieben, bei welchen die Ist-Betriebssignale und die Soll-Betriebsdaten ganz oder teilweise miteinander verglichen werden.

Durch die obigen Merkmale des Verfahrens wird bewirkt, dass auf die üblicherweise Verwendung findenden zertifizierten Sicherheits-Funkkomponenten verzichtet und stattdessen standardisierte, einer breiten Masse zugängliche, Funktechnologien wie beispielsweise W-LAN, 4G oder 5G und dergleichen verwendet werden können.

Andererseits bewirken die Merkmale des vorliegenden Verfahrens auch, dass, wenn ein Not-Halt ausgelöst wird, nur die entsprechende Arbeitszone betroffen ist, in welcher dieser ausgelöst wurde, nicht aber die gesamte Fertigungsanlage, da die bereitgestellten Soll-Betriebsdaten sowie die übermittelten Ist-Betriebssignale jeweils arbeitszonenspezifisch sind.

Dadurch, dass die fahrerlosen Transportwagen stets auf für Arbeitszonen spezifische Ist-Betriebssignale der Sicherheitssteuerung "warten" und die übermittelten Ist-Betriebssignale mit abgespeicherten Soll-Betriebsdaten vergleichen, um nicht in den Sonderbetriebsmodus zu verfallen, wird ein Angriff von außen auf den Förderbetrieb vergleichsweise erschwert.

Die fahrerlosen Transportwagen können freifahrend, hier aber auch schienengebunden oder kombiniert freifahrend oder schienengebunden sein, wobei vorzugsweise ausschließlich freifahrende fahrerlose Transportwagen zum Einsatz kommen, also auf zusätzliche spurhaltende Fördertechnik verzichtet wird.

Vorzugsweise liegen die Ist-Betriebssignale in einer Ist-Betriebssignal-Sequenz vor, die sich zyklisch wiederholt. Die Ist-Betriebssignal-Sequenz kann beispielsweise eine Tabelle sein, bei welcher die in ihr angegebenen Ist-Betriebssignale vorzugsweise von der ersten bis zur letzten Zeile jeweils einzeln übermittelt werden. Die Ist-Betriebssignal-Sequenz kann aber auch in einer fortlaufenden Zeile mit bestimmten Separatoren wie Komma- oder Semikolon-Separatoren vorliegen.

Möglich ist es darüber hinaus aber auch, dass die Ist-Betriebssignale und die Soll-Betriebsdaten jeweils als Datenpakete ausgebildet sind. Die Ist-Betriebssignal-Sequenz ist dann entsprechend eine Sequenz von als Datenpaketen ausgebildeten Ist-Betriebssignalen, die jeweils einen Carrier, einen Header und eine bestimmte Anzahl von Telegrammen umfassen, wobei die Datenpakete identisch oder verschieden sein können. Die Datenpakete können beliebig viele Telegramme umfassen, wobei vorzugsweise 8 bis 64 Telegramme, besonders vorzugsweise 32 Telegramme,je Datenpaket vorhanden sein können. Mittels solcher Telegramme können - neben den für den fortlaufenden Betrieb der fahrerlosen Transportwagen nötigen Ist-Betriebssignale - auch weitere Informationen und/oder Befehle für die fahrerlosen Transportwagen übermittelt werden. Diese weiteren Informationen und/oder Befehle für die fahrerlosen Transportwagen können Betriebsparameter aus der folgenden Gruppe von Betriebsparametern betreffen: einen Betriebsmodus, insbesondere eine Querfahrt oder eine Längsfahrt, einen Fahrmodus, insbesondere eine Kurven- oder eine Schrägfahrt, einen Sensorstatus, insbesondere ein Muting eines oder mehrerer Sensoren, die Teil der Sensoreinrichtung sind.

Die Informationen und/oder Befehle, die mittels der Telegramme übermittelt werden können, können daneben auch einen Aufbau oder ein Schließen eines sicheren Kommunikationskanals zwischen den fahrerlosen Transportwagen und der Sicherheitssteuerung zur Folge haben.

Wenn weitere Informationen und/oder Befehle an die fahrerlosen Transportwagen übermittelt werden, besteht das Problem, dass die in den Speichermodulen der fahrerlosen Transportwagen abgespeicherten Soll-Betriebsdaten nicht zur Gänze mit den übermittelten Ist-Betriebssignalen übereinstimmen. Ein Vergleich der Ist-Betriebssignale und der Soll-Betriebsdaten über deren volle Länge würde daher in diesem Fall dazu führen, dass die fahrerlosen Transportwagen in der entsprechenden Arbeitszone in den Sonderbetriebsmodus übergehen. In diesem Fall ist es daher unumgänglich, nur jeweils einen für den Vergleich relevanten Teil der Ist-Betriebssignale und der Soll-Betriebsdaten miteinander zu vergleichen.

Für eine sichere Übermittlung der Ist-Betriebssignal-Sequenz kann diese vor der Übermittlung ganz oder teilweise verschlüsselt und nach erfolgreichem Empfang entschlüsselt werden. Wenn die Ist-Betriebssignale als Datenpakete ausgebildet sind, ist es von Vorteil, die Telegramme der Datenpakete jeweils einzeln zu verschlüsseln, beispielsweise mittels eines Hash-Algorithmus oder eines Checksummen-Algorithmus. Möglich ist es aber auch, die Datenpakete insgesamt mittels eines Hash-Algorithmus oder eines Checksummen-Algorithmus zu verschlüsseln. Wenn Telegramme oder Datenpakete auf diese Weise verschlüsselt werden, wird für das entsprechende Telegramm oder das Datenpaket ein Hash-Key oder Checksummen-Key erzeugt, der für das Telegramm oder das Datenpaket einzigartig ist - eine Veränderung des Telegramms oder des Datenpakets hat insofern unweigerlich eine Änderung des Hash-Keys oder des Checksummen-Keys zur Folge. In diesem Fall kann der Vergleich der Soll-Betriebsdaten mit den Ist-Betriebssignalen auch durch einen Vergleich der jeweiligen Hash-Keys oder der jeweiligen Checksummen-Keys (Ist/Soll) miteinander erfolgen.

Ein solcher Vergleich gilt als ein Vergleich der für den Vergleich relevanten Teile der Ist-Betriebssignale und der Soll-Betriebsdaten.

Es ist von Vorteil, wenn die Ist-Betriebssignale in vordefinierten Zeitabständen an die Steuereinheiten der fahrerlosen Transportwagen gesendet werden, wobei die Zeitabstände in einem Bereich von 50 ms bis 30 s, insbesondere von 50 ms bis 5 s, insbesondere von 75 ms bis 500 ms, insbesondere 100 ms bis 250 ms liegen. Wenn die Zeitabstände, in denen die Ist-Betriebssignale übermittelt werden, bekannt sind, kann für die Steuereinheiten der fahrerlosen Transportwagen vorgesehen sein, dass diese den Empfang eines in der Ist-Betriebssignal-Sequenz nachfolgenden Ist-Betriebssignals innerhalb einer Zeit, die dem vordefinierten Zeitabstand plus einer Latenzzeit, die für das Senden des Ist-Betriebssignals sowie das Quittieren des Empfangs vonnöten ist, erwarten. Somit kann die sicherheitsbezogene Koordination der fahrerlosen Transportwagen um eine zeitliche Komponente ergänzt werden.

Die Ist-Betriebssignale und/oder die Soll-Betriebsdaten für jede Arbeitszone können zufällig generiert sein und einander entsprechen. Durch das zufällige Generieren der Ist-Betriebssignale kann die Sicherheit in der Fertigungsanlage erhöht werden, da so einerseits gewährleistet werden kann, dass nur für eine entsprechende Arbeitszone ein Sonderbetriebsmodus der fahrerlosen Transportwagen ausgelöst wird. Andererseits wird somit auch die Sicherheit gegenüber Versuchen von außen, sich Zugang zur Fertigungsanlage zu verschaffen und das gesamte FTS lahmzulegen, erhöht.

Ferner ist es von Vorteil, wenn die Soll-Betriebsdaten in einer Soll-Betriebsdaten-Sequenz vorliegen und die Soll-Betriebsdaten-Sequenz identisch mit der Ist-Betriebssignal-Sequenz ist. Hierdurch genügt es, abzugleichen, ob das übermittelte Ist-Betriebssignal zumindest in dem für den Vergleich relevanten Teil identisch mit dem abgespeicherten Soll-Betriebswert ist. Ist dies nicht der Fall, kann durch die Sicherheitssteuerung der Sonderbetriebsmodus der fahrerlosen Transportwagen in der entsprechenden Arbeitszone ausgelöst werden. Die fahrerlosen Transportwagen können den entsprechenden Soll-Betriebsdatensatz beispielsweise durch Erfassen einer Datenstruktur an einem Eingang einer Arbeitszone im mitgeführten Speichermodul abspeichern. Ein gegebenenfalls noch im Speichermodul vorhandener Soll-Betriebsdatensatz kann dann gelöscht oder deaktiviert werden.

Eine Datenstruktur kann beispielsweise ein RFID-Chip, ein QR-Code, ein Barcode und/oder eine andere optisch und/oder akustisch erfassbare Struktur wie beispielsweise ein Lichtsignal oder eine Tonfolge sein.

Vorzugsweise umfasst der der Sonderbetriebsmodus einen abrupten Not-Halt oder eine Geschwindigkeitsänderung, insbesondere eine Geschwindigkeitsreduktion, und/oder eine Beschleunigungsänderung, insbesondere eine Beschleunigungsreduktion, und/oder eine Änderung einer Förderrichtung der fahrerlosen Transportwagen in einer oder mehreren der Arbeitszonen. Neben den genannten Beispielen kann der Sonderbetriebsmodus auch eine Änderung des Drehmoments und/oder des Betriebsmodus des fahrerlosen Transportwagens umfassen.

Ein weiterer Vorteil ergibt sich, wenn der Sonderbetriebsmodus der fahrerlosen Transportwagen in einer bestimmten Arbeitszone
- selbsttätig durch die Sicherheitssteuerung in Reaktion auf einen vorgegebenen Auslöseparameter oder
- manuell durch das Betätigen eines Sonderbetriebsschalters
ausgelöst wird.

Ein solcher vorgegebener Auslöseparameter kann beispielsweise ein Sensorsignal eines oder mehrerer als Teil der Sensoreinrichtung an einem der fahrerlosen Transportwagen angeordneten oder in einer der Arbeitszonen angeordneten Sensoren sein. Insbesondere kann das Sensorsignal optisch, mechanisch oder akustisch sein und beispielsweise für ein sich in einem Förderweg eines fahrerlosen Transportwagens befindlichen Hindernis oder einen mechanischen Widerstandswert stehen.

Vorzugsweise umfasst das Verfahren außerdem den folgenden weiteren Schritt:
- Erfassen, in welchen Arbeitszonen sich die fahrerlosen Transportwagen befinden, mittels insbesondere der von den fahrerlosen Transportwagen jeweils mit sich geführten Sensoreinrichtungen, die hierzu jeweils ein eindeutiges Positionssignal auslesen.

Dieses Ausführungsbeispiel sowie alle nachfolgenden unmittelbar hierauf gerichteten Merkmale können auch als unabhängiger Aspekt der auf ein Verfahren zum Betreiben einer Fertigungsanlage gerichteten Erfindung beansprucht werden. Ein solches Verfahren zum Betreiben einer Fertigungsanlage umfasst dann nicht die Merkmale d) bis g), sondern das Obengenannte und gegebenenfalls die nachfolgend erwähnten sich direkt hierauf beziehenden Merkmale.

Im Rahmen der vorliegenden Erfindung ergibt sich aus dem unmittelbar davorstehenden Merkmal aber der Vorteil, dass sowohl dem Steuersystem für die fahrerlosen Transportwagen als auch der Sicherheitssteuerung zu jedem Zeitpunkt bekannt ist, ob, welche und wie viele fahrerlose Transportwagen sich in den Arbeitszonen aufhalten.

Hierzu ist es von Vorteil, wenn sich die Positionssignale jeweils aus mindestens zwei Einzelsignalen zusammensetzen, die erst in serieller Abfolge das eindeutige Positionssignal ergeben (serielle Redundanz). Hierdurch können Hardware-Komponenten der Fertigungsanlage eingespart und damit die Herstellungskosten reduziert werden, da es dann prinzipiell möglich ist, die beiden Einzelsignale von gleicher Qualität auszugestalten, derart, dass nur ein Sensor (optisch, mechanisch, elektrisch oder akustisch) hierfür vorgehalten werden muss.

Die seriell redundanten Einzelsignale sind hierbei vorzugsweise derart ausgestaltet, dass die statistische Wahrscheinlichkeit, dass an zwei Positionen identische Einzelsignale aufeinander folgen (und damit die Positionsbestimmung der fahrerlosen Transportwagen ungenau wird), gegen null tendiert. Die Einzelsignale können hierfür mehrere Informationseinheiten umfassen. Dabei hängt die statistische Wahrscheinlichkeit einerseits von der Anzahl von Informationseinheiten in einem Einzelsignal ab, bspw. vorhandener binärer Informationseinheiten, andererseits aber auch von der Anzahl der Einzelsignale, die in Serie das Positionssignal ergeben. Umfasst das Einzelsignal beispielsweise sechs Informationseinheiten und sind zwei Einzelsignale benötigt, um ein Positionssignal zu ermitteln, so beträgt die Wahrscheinlichkeit, dass zufälligerweise zwei Positionen in der Anlage durch dieselben Einzelsignale ermittelbar sind, 10⁻¹².

Derartige Einzelsignale können QR-Codes, Barcodes oder RFID-Chips sein.

Vorzugsweise wird hierzu auf dem Anlagenboden zumindest im Bereich des Eingangs der Arbeitszonen jeweils ein Barcode-Band angebracht, das mindestens zwei Barcodes, vorzugsweise eine Vielzahl von Barcodes, umfasst. Dieses Barcode-Band kann sich auch entlang zumindest eines Teils eines Förderweges durch die Arbeitszonen hindurch erstrecken oder entlang der gesamten Länge der Arbeitszonen. Ebenso ist selbstverständlich eine serielle Abfolge von QR-Codes oder von RFID-Chips als Band denkbar.

Werden Barcodes verwendet, können diese 3-, 4-, 5-, 6-, 7-, 8-, 9-, 10-, 11-, 12- oder mehrstellig sein. Sofern Barcodes verwendet werden, sind diese vorzugsweise 6-stellig und umfassen somit jeweils sechs binäre Informationseinheiten.

Vorzugsweise umfasst das Verfahren deswegen die folgenden weiteren Schritte:
- Übermitteln der eindeutigen Positionssignale an das Steuersystem oder die Sicherheitssteuerung;
- Ermitteln eines eindeutigen Positionsbereiches für jeden sich in einer Arbeitszone befindenden fahrerlosen Transportwagen.

Je mehr Positionssignale in, vor oder nach einer Arbeitszone erfasst werden, desto genauer können die Positionsbereiche der einzelnen fahrerlosen Transportwagen ermittelt werden.

Es ist von Vorteil, wenn die eindeutigen Positionssignale zumindest an Eingängen und an Ausgängen der Arbeitszonen ausgelesen werden. Hierdurch lässt sich der Positionsbereich der fahrerlosen Transportwagen konkret auf jeweils eine Arbeitszone einschränken. Vorzugsweise teilen die fahrerlosen Transportwagen durch die Erfassung des Positionssignals am Ausgang einer Arbeitszone dem Steuersystem sowie der Sicherheitssteuerung mit, dass sie sich nun nicht mehr in einer Arbeitszone befinden und löschen oder deaktivieren die in den Speichermodulen gespeicherten Soll-Betriebsdaten. Hierdurch kann vermieden werden, dass im Falle des Auslösens des Sonderbetriebsmodus' in einer Arbeitszone auch die freifahrenden Transportwagen betroffen sind, die sich zum Zeitpunkt des Auslösens zwischen zwei Arbeitszonen aufhalten. Im Fall dieses vorteilhaften Merkmals übernehmen in diesen Bereichen die Steuereinheiten der fahrerlosen Transportwagen sowie das Steuersystem den Normalbetrieb.

Vorzugsweise wird an einem Eingang jeder Arbeitszone zwischen den fahrerlosen Transportwagen und der Sicherheitssteuerung mittels Durch- oder Überfahrens oder Erfassens eines Kanalswitches, insbesondere in Form eines Gitters elektromagnetischer Strahlung, insbesondere eines Lichtgitters, durch die fahrerlosen Transportwagen jeweils ein ortsspezifischer Kommunikationskanal aufgebaut. Der ortsspezifische Kommunikationskanal kann sich beispielsweise dadurch ergeben, dass in den Speichermodulen der fahrerlosen Transportwagen die Ist-Betriebsdaten gespeichert oder aktiviert werden und eine Kommunikationsverbindung mit der Sicherheitssteuerung aufgebaut wird.

Unter einem Kanalswitch wird generell eine Vorrichtung verstanden, die als unmittelbarer oder mittelbarer Schalter fungiert und mittels welcher ein Kommunikationskanal in der oben beschriebenen Weise aufgebaut werden kann.

Die Sicherheitssteuerung kann die Ist-Betriebssignale vorteilhafterweise kontinuierlich senden. Im obigen Falle würden die fahrerlosen Transportwagen dann nur die für ihre entsprechende Arbeitszone spezifischen Ist-Betriebssignale "mithören".

Vorzugsweise ist ein derartiger Kanalswitch jeweils auch an Ausgängen der Arbeitszonen angeordnet. Der Kanalswitch bzw. die Kanalswitche können in steuerungstechnischer Hinsicht auch mit entsprechenden Positionssignalen an den Eingängen und ggf. an den Ausgängen zusammenwirken. In diesem Fall würde durch die Kanalswitche ein Kommunikationskanal zwischen den fahrerlosen Transportwagen und der Sicherheitssteuerung aufgebaut und durch das Steuersystem registriert werden, in welchem Positionsbereich sich die fahrerlosen Transportwagen befinden. Das Steuersystem teilt dann der Sicherheitssteuerung mit, in welchen Positionsbereichen sich die fahrerlosen Transportwagen befinden.

Ein Vorteil ergibt sich ferner, wenn mit dem Aufbau des Kommunikationskanals der Schritt des Vergleichens der empfangenen Ist-Betriebssignale mit den in den Speichermodulen der fahrerlosen Transportwagen bereitgestellten Soll-Betriebsdaten eingeleitet wird. Wenn an den Ausgängen ebenfalls Kanalswitche angeordnet sind, ist es von Vorteil, wenn das Vergleichen der empfangenen Ist-Betriebssignale mit den Soll-Betriebsdaten mittels Durch- oder Überfahrens oder Erfassens des Kanalswitches beendet wird.

Vorzugsweise werden die Sensorfelder der fahrerlosen Transportwagen jeweils an einem Eingang jeder Arbeitszone mittels Durch- oder Überfahrens oder Erfassens eines Mutingswitches, insbesondere in Form eines von den Sensormodulen der fahrerlosen Transportwagen auslesbaren Mutingsignals, insbesondere eines Musters und/oder einer Kontur, zumindest bereichsweise gemutet.

Unter einem Muting wird vorliegend generell ein Abschwächen des Sensorfeldes bzw. ein Ausblenden von im Sensorfeld eines fahrerlosen Transportwagens befindlichen Gegenständen verstanden. Insbesondere bei Arbeitszonen, in welchen sich die fahrerlosen Transportwagen in einem separaten Fahrraum, der durch ein Fahrraumgehäuse begrenzt ist, fortbewegen, ist ein solches Muting von Vorteil. Hierdurch kann vermieden werden, dass die Steuereinheiten der fahrerlosen Transportwagen das im Sensorfeld der freifahrenden Transportwagen befindliche Fahrraumgehäuse als Hindernis wahrnehmen und ggf. in den Sonderbetriebsmodus übergehen.

Bei einer Fertigungsanlage der oben genannten Art wird die oben genannten Aufgabe dadurch gelöst, dass
d) in den Speichermodulen der fahrerlosen Transportwagen für jede Arbeitszone individuelle Soll-Betriebsdaten abgespeichert sind;
e) eine Sicherheitssteuerung vorhanden ist, die derart konfiguriert ist, dass diese für jede Arbeitszone individuelle und kontinuierliche Ist-Betriebssignale an die jeweiligen Steuereinheiten der fahrerlosen Transportwagen sendet;
f) die jeweilige Steuereinheit eines fahrerlosen Transportwagens derart eingerichtet ist, dass diese die Ist-Betriebssignale empfängt und das empfangene Ist-Betriebssignal mit den in den Speichermodulen abgespeicherten Soll-Betriebsdaten vergleicht;
wobei
g) die Steuereinheiten jeweils derart eingerichtet sind, dass diese bei einer Abweichung zwischen zumindest einem für den Vergleich relevanten Teil eines empfangenen Ist-Betriebssignals und zumindest einem für den Vergleich relevanten Teil eines entsprechenden abgespeicherten Soll-Betriebswerts einen Sonderbetriebsmodus der fahrerlosen Transportwagen in der entsprechenden Arbeitszone auslösen.

Die Vorteile der erfindungsgemäßen Fertigungsanlage entsprechen denjenigen, die zum obengenannten erfindungsgemäßen Verfahren zum Betreiben einer Fertigungsanlage angegeben wurden. Dasselbe gilt auch für die nachfolgenden vorteilhaften Merkmale für die Fertigungsanlage, sofern nicht explizit etwas anderes ausgeführt sein sollte. Ebenso gelten für die nachfolgenden vorteilhaften Merkmale die Definitionen und Erläuterungen, die oben zu den sinngemäß entsprechenden Merkmalen des Verfahrens angegeben wurden, sofern nicht explizit etwas anderes ausgeführt sein sollte. Sollten beim Verfahren Merkmale ausgeführt worden sein, die sich nicht in den Ansprüchen niederschlagen, sind diese bei den entsprechenden Merkmalen der Fertigungsanlage auch dort als vorteilhafte Weiterbildungen anzusehen.

Vorzugsweise liegen die Ist-Betriebssignale in einer Ist-Betriebssignal-Sequenz vor, die zyklisch wiederholbar ist.

Es ist von Vorteil, wenn die Sicherheitseinrichtung derart eingerichtet ist, dass diese die Ist-Betriebssignale in vordefinierten Zeitabständen an die Steuereinheiten der fahrerlosen Transportwagen sendet, wobei die Zeitabstände in einem Bereich von 50 ms bis 1000 ms, insbesondere von 75 ms bis 500 ms, insbesondere von 100 ms bis 250 ms liegen.

Vorteilhafterweise sind die Ist-Betriebssignale und/oder die Soll-Betriebsdaten für jede Arbeitszone zufällig generiert und entsprechen einander.

Vorzugsweise liegen die Soll-Betriebsdaten in einer Soll-Betriebsdaten-Sequenz vor und die Soll-Betriebsdaten-Sequenz ist identisch mit der Ist-Betriebssignal-Sequenz.

Vorteilhafterweise umfasst der Sonderbetriebsmodus einen abrupten Not-Halt oder eine Geschwindigkeitsänderung, insbesondere eine Geschwindigkeitsreduktion, und/oder eine Beschleunigungsänderung, insbesondere eine Beschleunigungsreduktion, und/oder eine Änderung der Förderrichtung der fahrerlosen Transportwagen in einer oder mehreren der Arbeitszonen.

Ein Vorteil ergibt sich, wenn der Sonderbetriebsmodus der fahrerlosen Transportwagen in einer bestimmten Arbeitszone
- selbsttätig durch die Sicherheitssteuerung in Reaktion auf einen vorgegebenen Auslöseparameter oder
- manuell durch das Betätigen eines Sonderbetriebsschalters
ausgelöst werden kann.

Weiterhin ergibt sich ein Vorteil, wenn mittels der von den fahrerlosen Transportwagen jeweils mit sich geführten Sensoreinrichtungen durch Auslesen eines eindeutigen Positionssignals erfasst werden kann, in welchen Arbeitszonen sich die fahrerlosen Transportwagen befinden.

Vorzugsweise setzen sich die Positionssignale aus mindestens zwei Einzelsignalen zusammen, derart, dass diese erst in serieller Abfolge das eindeutige Positionssignal ergeben.

Vorteilhafterweise kann von den Steuereinheiten der fahrerlosen Transportwagen das eindeutige Positionssignal an das Steuersystem übermittelt werden und vom Steuersystem ein eindeutiger Positionsbereich für jeden sich in einer Arbeitszone befindenden fahrerlosen Transportwagen ermittelt werden.

Vorteilhaft ist es, wenn die eindeutigen Positionssignale zumindest an Eingängen und an Ausgängen der Arbeitszonen angeordnet sind.

Weiterhin ist es vorteilhaft, wenn an einem Eingang jeder Arbeitszone ein Kanalswitch angeordnet ist, insbesondere in Form eines Gitters einer elektromagnetischen Strahlung, insbesondere eines Lichtgitters, der von den fahrerlosen Transportwagen durch- oder überfahren oder erfasst werden kann, derart, dass zwischen den fahrerlosen Transportwagen und der Sicherheitssteuerung ein ortsspezifischer Kommunikationskanal aufgebaut wird.

Vorzugsweise ist an einem Eingang jeder Arbeitszone ein Mutingswitch angeordnet, insbesondere in Form eines von den Sensoreinrichtungen der fahrerlosen Transportwagen auslesbaren Mutingsignals, insbesondere eines Musters und/oder einer Kontur, der von den fahrerlosen Transportwagen durch- oder überfahren oder erfasst werden kann, derart, dass die Sensorfelder der fahrerlosen Transportwagen jeweils zumindest bereichsweise gemutet werden.

Vorteilhaft ist es ferner, wenn die fahrerlosen Transportwagen als Mesh-Knotenpunkte für ein anlagenumspannendes Mesh-W-LAN-Netzwerk ausgebildet sind. Vorliegend werden Mesh-Knotenpunkte als Punkte innerhalb des W-LAN-Netzwerks verstanden, die das von einer W-LAN-Zentrale erzeugte W-LAN verstärken oder ein separates W-LAN erzeugen. Innerhalb des Mesh-W-LAN-Netzwerkes werden gitterartig erzeugte W-LAN-Bereiche zu einem gemeinsamen anlagenumspannenden W-LAN-Netzwerk zusammengefasst. Hierdurch wird erreicht, dass die gesamte Fertigungsanlage weitestgehend homogen von dem Funknetz erreicht wird, wodurch eine weitestgehend homogene Übertragungsgeschwindigkeit von Daten, insbesondere der Ist-Betriebssignale, in dem W-LAN-Netzwerk erreicht wird.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: ein schematisches Layout einer Fertigungsanlage zur Herstellung von Werkstücken mit mehreren Arbeitszonen;
- Figur 2: eine perspektivische Ansicht eines fahrerlosen Transportwagens eines fahrerlosen Transportsystems (FTS) für Fahrzeugkarosserien, bei dem ein Transportwagen-Fahrwerk über eine Verbindungseinrichtung mit einer Befestigungseinrichtung für Werkstücke verbunden ist;Figur 3 eine schematische Ansicht in Förderrichtung bei einem Ausführungsbeispiel mit einer offenen Arbeitszone, bei welcher ein Fahrboden für die fahrerlosen Transportwagen ein Arbeitsboden für Werker ist;
- Figur 4: eine schematische Ansicht in Förderrichtung bei einem weiteren Ausführungsbeispiel mit einer offenen Arbeitszone, bei welcher der Fahrboden für die fahrerlosen Transportwagen ein Arbeitsboden für Werker ist und bei welcher ein Fahrraum mit einem Fahrraumgehäuse für die fahrerlosen Transportwagen vorhanden ist;
- Figur 5: eine schematische Ansicht in Förderrichtung bei einem Ausführungsbeispiel mit einer geschlossenen Arbeitszone, bei welcher der Fahrboden für die fahrerlosen Transportwagen auf einem niedrigeren Höhenniveau als der Arbeitsboden für die Werker liegt und bei welcher ein Fahrraum mit einem Fahrraumgehäuse für die fahrerlosen Transportwagen vorhanden ist;
- Figur 6: eine schematische Draufsicht eines Eingangs der Arbeitszone;
- Figur 7: einen Programmablaufplan für den Ablauf beim Durchfahren einer Arbeitszone, bei welchem die Schritte des Bestimmens eines Positionsbereichs mit einem Positionssignal und dem Empfangen von Ist-Betriebssignalen sowie dem Vergleichen der Ist-Betriebssignale mit abgespeicherten Ist-Betriebsdaten vorgenommen werden;
- Figur 8: einen Programmablaufplan für den Ablauf beim Durchfahren einer Arbeitszone mit einer durchgängigen Tunnelwand und einem Fahrraum für die fahrerlosen Transportwagen sowie einem Fahrraumgehäuse, das den Fahrraum begrenzt;
- Figur 9: einen Programmablaufplan für den Ablauf in einer Steuereinheit eines fahrerlosen Transportwagens beim Empfangen und Prüfen einer Ist-Betriebssignal-Sequenz;
- Figur 10: einen Programmablaufplan für den Ablauf in einer Sicherheitssteuerung beim Senden der Ist-Betriebssignal-Sequenz.

### BESCHREIBUNG BEVORZUGTER AUSFÜHRUNGSBEISPIELE

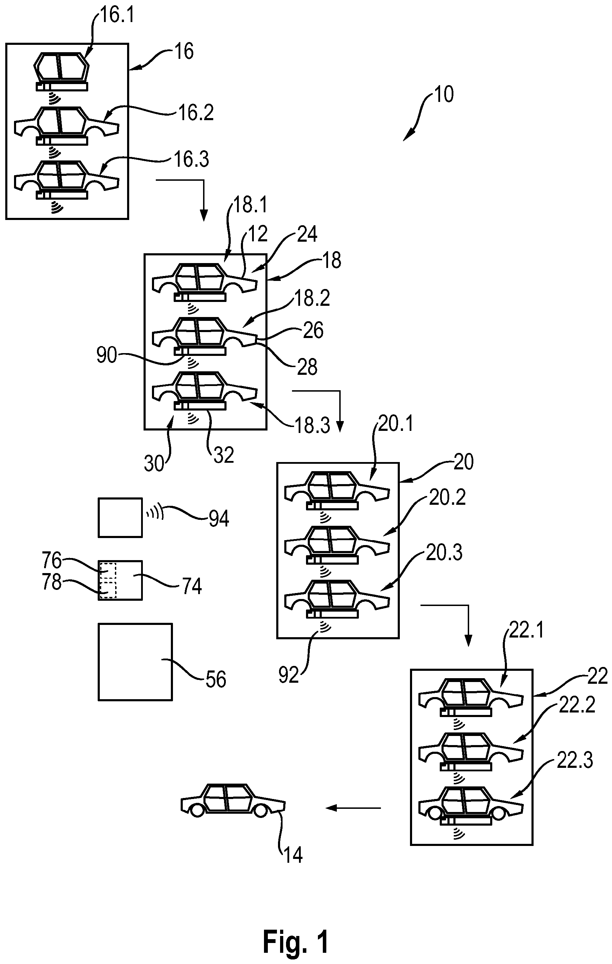

**Figur 1** illustriert schematisch eine Fertigungsanlage 10 zur Herstellung von Werkstücken 12, insbesondere von Fahrzeugen 14, die beispielhaft als Personenkraftwagen veranschaulicht sind. Wenn eine nachfolgend beschriebene Struktur der Fertigungsanlage 10 in den Figuren mehrfach gezeigt ist, ist nicht immer jede dieser Strukturen mit dem entsprechenden Bezugszeichen versehen.

Die Fertigungsanlage 10 umfasst einzelne Anlagen 16, 18, 20 und 22, die ihrerseits jeweils eine oder mehrere Arbeitszonen 24 umfassen, in denen zur Herstellung der Werkstücke 12 erforderliche Arbeitsschritte an Zwischenwerkstücken durchgeführt werden, die sich in verschiedenen Produktionsstadien befinden. Zwischenwerkstücke sind grundsätzlich mit 26 bezeichnet, unabhängig von dem Produktionsstadium, in dem sich ein bestimmtes Zwischenwerkstück 26 befindet.

In einer Rohbauanlage 16 werden Arbeiten an Zwischenwerkstücken 26 in Form von Fahrzeugkarosserie-Vorstufen, die nicht mit einem Bezugszeichen versehen sind, in den einzelnen Produktionsstadien beim Zusammenfügen einer Fahrzeugkarosserie 28 durchgeführt. Die Arbeitszonen 24 sind dort mit 16.i bezeichnet. Der Index ".i" soll hier und auch bei entsprechenden Bezugszeichen darstellen, dass jeweils i=1 bis n Arbeitszonen vorhanden sein können, wobei n jeweils die Gesamtzahl der Arbeitszonen angibt, in denen die Fahrzeugkarosserien 10 auf unterschiedliche Art behandelt werden. Wenn nur eine einzige Zone vorhanden ist, ist n folglich jeweils gleich 1.

In verschiedenen Arbeitszonen 16.i der Rohbauanlage werden zum Beispiel unterschiedliche, in einem Presswerk gefertigte Blechteile zu den Fahrzeugkarosserien 28 miteinander verbunden. Dies kann in unterschiedlichen Arbeitszonen 16.i durch unterschiedliche bekannte Techniken erfolgen; beispielhaft seien Punktschweißen, Bahnschweißen, Druckfügen, Nieten und Kleben genannt. Es werden also schon das erste Blechteil und alle dazwischenliegenden Aufbaustrukturen bis zur endgültigen Fahrzeugkarosserie als Zwischenwerkstück 26 verstanden. Es sind exemplarisch drei Arbeitszonen 16.1, 16.2 und 16.3 veranschaulicht.

In einer Korrosionsschutzanlage 18 mit Arbeitszonen 18.i und in einer Oberflächenbehandlungsanlage 20 mit Arbeitszonen 20.i werden Arbeiten an Zwischenwerkstücken 26 in Form der ausgebildeten Fahrzeugkarosserie 28 in den einzelnen Produktionsstadien, d.h. dort den einzelnen Beschichtungsstadien, durchgeführt, die in der Korrosionsschutzanlage 18 und der Oberflächenbehandlungsanlage 20 durchlaufen werden. Bei einer kataphoretischen Tauchbehandlung für den Korrosionsschutz in der Korrosionsschutzanlage 18 ist nur eine Arbeitszone 18.1 vorhanden. Es können, abhängig von Techniken, die zum Aufbringen eines Korrosionsschutzes gewählt werden und keine Tauchbehandlung umfassen, aber auch mehrere Arbeitszonen 18.i vorhanden sein; es sind exemplarisch drei Arbeitszonen 18.1, 18.2 und 18.3 bezeichnet.

Die verschiedenen Arbeitszonen 20.i in der Oberflächenbehandlungsanlage 20 können im Wesentlichen in Applikationszonen, Temperierzonen und Funktionszonen unterteilt werden. In den Applikationszonen werden die Fahrzeugkarosserien 28 mit einer Beschichtung oder einem Material versehen. Zum Beispiel zählen hierzu die Applikation von Füller, Basislack oder Decklack, oder das Aufbringen von Material für den Unterbodenschutz oder von Material zum Nahtabdichten. In den Temperierzonen werden die Fahrzeugkarosserien 28 temperiert. Unter "Temperieren" einer Fahrzeugkarosserie ist die Herbeiführung einer bestimmten Temperatur der Fahrzeugkarosserie 28 gemeint, die diese zunächst noch nicht besitzt. Es kann sich um eine Temperaturerhöhung oder eine Temperaturverringerung handeln. Auch das Abdunsten einer Fahrzeugkarosserie 28 zählt vorliegend als eine Behandlung im Rahmen eines "Temperierens". In den Funktionszonen erfolgen Maßnahmen, welche den Gesamtprozess und den Gesamtablauf unterstützen. Zum Beispiel zählen hierzu die Durchführungen von Audits und gegebenenfalls das Nachbearbeiten von Oberflächenbereichen der Fahrzeugkarosserie 28, die nicht dem geforderten Qualitätsstandard entsprechen. Eine andere Funktionszone bildet zum Beispiel eine Speicherzone, in dem Fahrzeugkarosserien 28 zwischengelagert und/oder vorgehalten werden können.

In **Figur 1** sind nur drei Arbeitszonen 20.1, 20.2 und 20.3 bezeichnet; in der Praxis gibt es in der Oberflächenbehandlungsanlage 20 meist mehr als drei Arbeitszonen 20.i.

In einer Endmontageanlage 22 schließlich werden Arbeiten an Zwischenwerkstücken 26 in Form von unterschiedlichen Fahrzeugkarosserie-Nachstufen, die nicht eigens mit einem Bezugszeichen versehen sind, in den einzelnen Produktionsstadien beim Montieren von Komponenten und Bauteilen in und an der fertiggestellten Fahrzeugkarosserie 28, durchgeführt. In mehrere Arbeitszonen 22.i werden unterschiedliche Bauteile und Komponenten, beispielsweise die Sitze, die Armatureneinheit und schließlich der Motor, eingebaut und montiert und das fahrbereite Fahrzeug 14 fertiggestellt. Es sind beispielhaft drei Arbeitszonen 22.1, 22.2, 22.3 bezeichnet.

Die Fertigungsanlage 10 umfasst ein fahrerloses Transportsystem (FTS) 30, das mehrere fahrerlose Transportwagen 32 umfasst. Mittels der fahrerlosen Transportwagen 32 werden die Zwischenwerkstücke 26 durch die Arbeitszonen 24 gefördert. Wenn in der Korrosionsschutzanlage 18 eine kataphoretische Tauchbehandlung durchgeführt wird, wird dort ein abweichendes Fördersystem für die Tauchvorgänge eingesetzt, beispielsweise ein Hängebahnsystem, wie es an und für sich bekannt ist. In diesem Fall gibt es vor und hinter der Korrosionsschutzanlage jeweils eine Übergabeeinrichtung, mittels welcher die Zwischenwerkstücke 26 von dem FTS 30 aus der Rohbauanlage 16 abgenommen und an die Korrosionsschutzanlage 18 übergeben bzw. von der Korrosionsschutzanlage 18 an das FTS 30 in der Oberflächenbehandlungsanlage 20 übergeben werden.

Unabhängig davon, ob das FTS 30 nur in einer, in einigen oder in allen der Anlagen 16, 18, 20 und 22 eingesetzt wird, werden in jedem Fall Zwischenwerkstücke 26 mit Hilfe der fahrerlosen Transportwagen 32 durch mehrere Arbeitszonen 24 einer bestimmten Anlage 16, 18, 20 bzw. 22 gefördert.

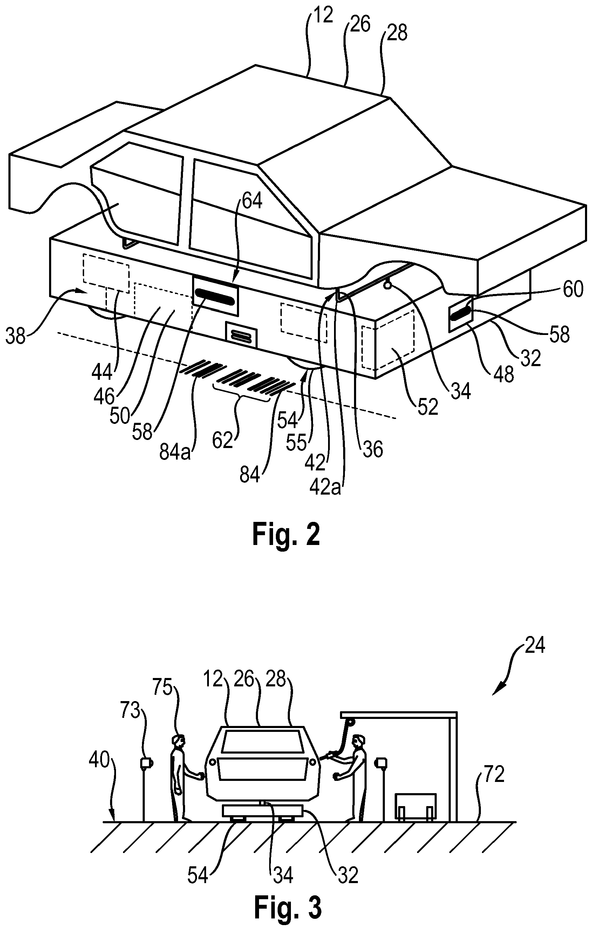

Die fahrerlosen Transportwagen 32 des FTS 30 werden nun anhand von **Figur 2** erläutert, welche einen einzelnen fahrerlosen Transportwagen 32 zeigt. Der fahrerlose Transportwagen 32 umfasst eine Befestigungseinrichtung 34, an welcher ein Zwischenwerkstück 26 befestigt werden kann. In **Figur 2** ist die Befestigungseinrichtung 34 auf eine Fahrzeugkarosserie 28, aber auch auf entsprechende Fahrzeugkarosserie-Vorstufen und die Fahrzeugkarosserie-Nachstufen, abgestimmt. Hierfür umfasst die Befestigungseinrichtung 3 ein Tragprofil 36 mit Lagerbolzen, welche in an und für sich bekannter Art und Weise mit Gegenelementen an dem Zwischenwerkstück 26 zusammenarbeiten, so dass dieses an der Befestigungseinrichtung 34 fixiert werden kann.

Der fahrerlose Transportwagen 32 umfasst ein Transportwagen-Fahrwerk 38, welches auf einem Fahrboden 40 abläuft und die Befestigungseinrichtung 34 lagert. Das Transportwagen-Fahrwerk 38 ist über eine Verbindungseinrichtung 42, beim vorliegenden Ausführungsbeispiel in Form von zwei nach oben ragenden Tragstreben 42a, mit der Befestigungseinrichtung 34 gekoppelt; in **Figur 2** ist lediglich eine Tragstrebe 42a zu erkennen.

Jeder Transportwagen 32 führt jeweils eine Antriebseinrichtung 44, eine Steuereinheit 46, eine Sensoreinrichtung 48, ein Speichermodul 50 und eine Energieversorgungseinrichtung 52 mit sich, so dass die fahrerlosen Transportwagen 32 unabhängig voneinander angetrieben und verfahren werden können. Die Sensoreinrichtung 48 erzeugt ein den fahrerlosen Transportwagen 32 umgebendes Sensorfeld, mittels welchem Gegenstände und/oder Hindernisse und/oder Signalstrukturen erfasst werden können.

Die Antriebseinrichtung 44 ist beim vorliegenden Ausführungsbeispiel omnidirektional ausgeführt, sodass die fahrerlosen Transportwagen 32 aus dem Stand heraus in eine beliebige Richtung fahren können. Das omnidirektional ausgeführte Antriebssystem 44 umfasst hierzu an sich bekannte Fahr-Dreh-Module 54. Alternativ können auch beispielsweise Allseitenräder oder Mecanum-Räder vorhanden sein, wie dies an sich im Stand der Technik bekannt ist.

Die Fahr-Dreh-Module 54 umfassen jeweils Antriebseinrichtungen 44, die derart mit nach unten vorstehenden Antriebsrädern 55 gekoppelt sind, dass die Antriebsräder 55 nicht nur für den Vortrieb des fahrerlosen Transportwagens 32 angetrieben, sondern auch jeweils um eine Lenkachse verdreht werden können. Durch eine entsprechende Ansteuerung der Fahr-Dreh-Module 54 können auch Drehungen auf der Stelle oder Schrägfahrten realisiert werden. Dadurch können die fahrerlosen Transportwagen 32 auch auf engem Raum manövrieren.

Die Fahr-Dreh-Module 54 werden durch die Steuereinheit 46 angesteuert, die ihrerseits mit einem übergeordneten Steuersystem 56 kommuniziert, das den Betrieb der fahrerlosen Transportwagen 32 in der Fertigungsanlage 10 koordiniert und zu diesem Zweck Steuersignale an die Steuereinheiten 46 der fahrerlosen Transportwagen 32 sendet. Die Steuersignale können mittels einer Funktechnologie übermittelt werden, die zum Beispiel ein definiertes Ziel in Form einer Anlagenkoordinate umfassen können. Die fahrerlosen Transportwagen 32 können dann beispielsweise selbsttätig zur angegebenen Anlagenkoordinate manövrieren. Das Steuersystem 56 ist lediglich in **Figur 1** und dort nur stark schematisch veranschaulicht.

Die Energieversorgungseinrichtung 52 des fahrerlosen Transportwagens 32 ist autark, d.h. die Energieversorgung der Fahr-Dreh-Module 54 und der sonstigen elektrischen Verbraucher im Fahrbetrieb, d.h. während der Bewegung des fahrerlosen Transportwagens 32, ist unabhängig von externen Energiequellen sicherstellt. In der Praxis sind wiederaufladbare Energiespeicher in Form eines oder mehrerer Akkumulatoren oder Kondensatoren vorgesehen. Beim vorliegenden Ausführungsbeispiel der Fertigungsanlage 10 sind zwischen den Arbeitszonen nicht dargestellte Aufladevorrichtungen vorhanden, die als Ladestation oder Ladebahn, beispielsweise als Schleifleitung, ausgebildet sein können.

Der fahrerlose Transportwagen 32 umfasst - wie oben bereits erwähnt wurde - eine Sensoreinrichtung 48. Beim vorliegenden Ausführungsbeispiel des fahrerlosen Transportwagen 32 umfasst die Sensoreinrichtung 48 vorne, hinten und an den Seiten am Transportwagen-Fahrwerk 38 angebrachte Sensoren 58, von denen in **Figur 2** ein vorderer und ein seitlicher Sensor 58 zu erkennen sind. Die Sensoreinrichtung 48 erzeugt ein Sensorfeld, das nicht eigens dargestellt ist, die einerseits dazu dient, in bestimmten Fällen zu erkennen, wann der fahrerlose Transportwagen 32 in eine Arbeitszone 24 einfährt oder diese wieder verlässt; hierauf wird weiter unten nochmals eingegangen.

Andererseits können mit der Sensoreinrichtung 48 Hindernisse im Fahrweg des fahrerlosen Transportwagens 32, seien es andere fahrerlose Transportwagen 32 oder im Bewegungsfeld des fahrerlosen Transportwagens 32 auftauchende Gegenstände, erfasst werden, sodass gegebenenfalls eine alternative Route zum Ziel des fahrerlosen Transportwagens 32 berechnet und entsprechende Steuerbefehle an den fahrerlosen Transportwagen 32 weitergegeben und/oder ein Sonderbetriebsmodus des fahrerlosen Transportwagens 32 ausgelöst werden können.

Außerdem umfasst die Sensoreinrichtung 48 des fahrerlosen Transportwagens 32 Positionssensoren 60, von welchen exemplarisch nur ein Positionssensor 60 veranschaulicht ist. Die Positionssensoren 60 erfassen eindeutige Positionssignale 62, wie weiter unten noch erläutert werden wird, und sind Teil eines insgesamt mit 64 bezeichneten Ortungssystems, mit dem Positionsbereiche der fahrerlosen Transportwagen 32 in der Fertigungsanlage 10 zumindest in Bezug auf die Arbeitszonen 24 ermittelt werden kann. Auch hierauf wird weiter unten nochmals eingegangen.

Nachfolgend werden beispielhaft verschiedene Konzepte und Ausbildungen, die bei unterschiedlichen Arbeitszonen 24 in der Fertigungsanlage 10 möglich sind, beschrieben. Diese verschiedenen Konzepte werden nicht eigens in Figuren veranschaulicht und dienen lediglich dem Verständnis dafür, wie der Fachmann die Fertigungsanlage 10 gemäß der Erfindung konkret ausführen kann. Die Arbeitszone 24 kann beispielsweise als offene Arbeitszone 24 ohne seitliche Begrenzung ausgebildet sein, bei der der Fahrboden 40 für die fahrerlosen Transportwagen 32 durch den Hallenboden ausgebildet ist. Dieses Konzept kann beispielsweise bei einer Arbeitszone 16.i oder 22.i in der Rohbauanlage 16 bzw. der Endmontageanlage 22 umgesetzt werden, in welcher automatisch arbeitende Roboter Montagetätigkeiten an der Fahrzeugkarosserie 28 durchführen oder Bauteile und Komponenten in eine Fahrzeugkarosserie-Nachstufe 32 einbauen. Beispielsweise kann ein solcher Roboter Fahrzeugtüren befestigen.

Die Arbeitszone 24 kann auch als eine abgewandelte offene Arbeitszone ausgebildet sein, bei der die fahrerlosen Transportwagen 32 in einem tunnelartigen Fahrraum bewegt werden, der durch ein Fahrraumgehäuse begrenzt ist. Auch eine solche Arbeitszone 24 kann beispielsweise eine Arbeitszone 22.i in der Endmontageanlage 22 sein.

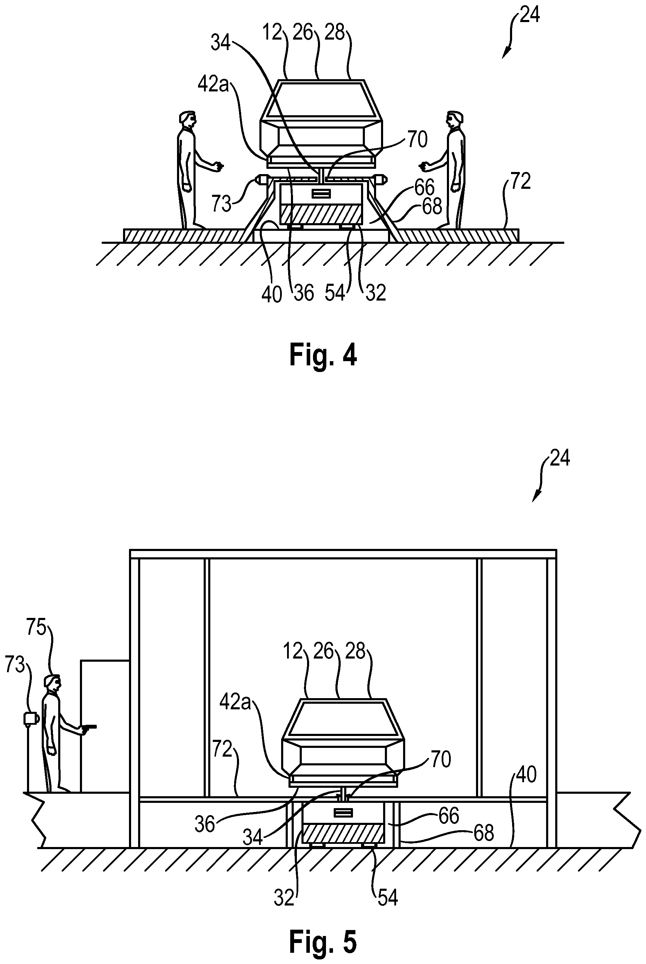

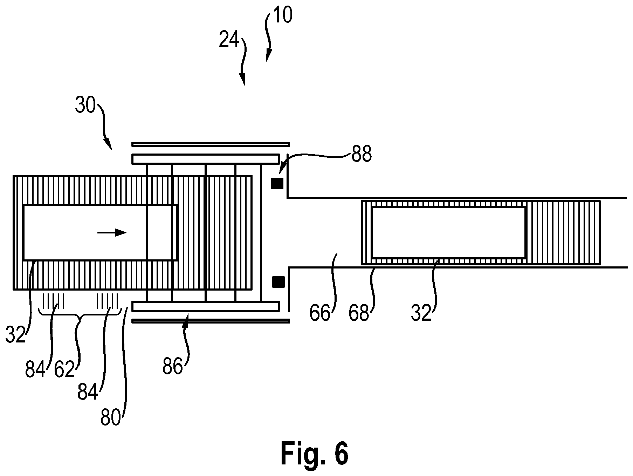

In den **Figuren 4 bis 6** ist ein solcher Fahrraum mit 66 bezeichnet. Ein jeweiliges Fahrraumgehäuse 68 ist an seinen Stirnenden offen, so dass die fahrerlosen Transportwagen 32 dort ein- bzw. ausfahren können. Darüber hinaus ist in Längsrichtung ein durchgehender Verbindungsdurchgang 70 ausgebildet, der zu der Verbindungseinrichtung 42, d.h. hier den Tragstreben 42a der fahrerlosen Transportwagen 32, komplementär ist, die so nach oben aus dem Fahrraumgehäuse 68 heraustreten kann. Der Fahrboden 40 für die fahrerlosen Transportwagen 32 in dem Fahrraumgehäuse 68 liegt auf dem Höhenniveau des Hallenbodens, auf dem sich die Werker bewegen.

Bei der Einfahrt eines mit einem Zwischenwerkstück 26 beladenen fahrerlosen Transportwagens 32 in eine wie oben beschriebene offene Arbeitszone mit Fahrraumgehäuse 68 wird die Verbindungseinrichtung 42 des fahrerlosen Transportwagens 32 also gleichsam in den Verbindungsdurchgang 70 des Fahrraumgehäuses 68 eingefädelt. Wenn das Zwischenwerkstück 26 durch die Arbeitszone 24 in einem Behandlungstunnel gefördert wird, bewegt sich das Transportwagen-Fahrwerk 38 im Fahrraum 66 und führt die Befestigungseinrichtung 34 in der Arbeitszone 24 oberhalb des Fahrraumgehäuses 68 mit sich, wobei sich die Verbindungseinrichtung 42, d.h. beim vorliegenden Ausführungsbeispiel die Tragstreben 42a, durch den Verbindungsdurchgang 70 hindurch erstreckt.

Die Arbeitszone 24 kann auch derart ausgestaltet sein, dass sich dort die Werker auf einem separaten Arbeitsboden 72, der oberhalb des Höhenniveaus des Fahrbodens 40 verläuft, bewegen. Bei diesem Ausführungsbeispiel bildet ein Teil des Arbeitsbodens 72 die obere Begrenzung des Fahrraumes 66 und ist somit Teil des Fahrraumgehäuses 68 mit dem Verbindungsdurchgang 70.

Die Arbeitszone 24 kann auch als geschlossene Arbeitszone 24 ausgebildet sein; dies kann beispielsweise eine Arbeitszone 20.i in der Oberflächenbehandlungsanlage 20 sein, wie sie in den oben angesprochenen Temperierzonen oder Applikationszonen vorgesehen sein kann. Insbesondere ist eine solche geschlossene Arbeitszone also allgemein eine Behandlungseinrichtung, die nicht gesondert dargestellt ist.

Die jeweiligen, nachfolgend erläuterten Komponenten einer solchen Behandlungseinrichtung spiegeln lediglich die Grundfunktionalität der Komponente wider. So ist zum Beispiel das Gehäuse eines Trockners in bekannter Art und Weise anders ausgebildet, als beispielsweise das Gehäuse einer Lackierkabine.

Die Behandlungseinrichtung umfasst ein Gehäuse, welches einen Behandlungstunnel begrenzt und einen Tunnelboden sowie Seitenwände und eine Decke umfasst. Das Gehäuse bzw. der Behandlungstunnel kann über einen Zugang von einem Werker betreten werden. Die unmittelbar vorgenannten Strukturen sind in den **Figuren 3 bis 6** nicht eigens mit Bezugszeichen versehen.

Bei den geschlossenen Arbeitszonen ist der Fahrraum 66 vorhanden, der durch das Fahrraumgehäuse 68 mit dem Verbindungsdurchgang 70 begrenzt ist. Bei nicht eigens gezeigten Abwandlungen kann bei einer geschlossenen Arbeitszone 24 aber auch auf den Fahrraum 66 verzichtet werden.

Der Fahrboden 40 für die fahrerlosen Transportwagen 32 kann auf einem Höhenniveau unterhalb des Behandlungstunnels bzw. unterhalb des Tunnelbodens angeordnet sein. Alternativ kann der Fahrboden 40 der fahrerlosen Transportwagen 32 auf dem gleichen Höhenniveau angeordnet sein wie der Behandlungstunnel bzw. wie dessen Tunnelboden. Hierzu ist das Fahrraumgehäuse 68 im Behandlungstunnel untergebracht, so dass der Fahrraum 66 innerhalb des Behandlungstunnels begrenzt ist.

Zum Einfahren der fahrerlosen Transportwagen 32 in den jeweiligen Fahrraum 66 gilt das oben Gesagte sinngemäß entsprechend.

Bei einem Trockner können zu beiden Seiten des Behandlungstunnels Druckräume angeordnet sein, durch welche in an und für sich bekannter Weise konditionierte Luft in den Behandlungstunnel und auf die Zwischenwerkstücke 26, hier die beschichteten Fahrzeugkarosserien 28, geblasen wird.

Bei einer Lackierkabine können in dem Behandlungstunnel Applikationsroboter, die nicht eigens dargestellt sind, angeordnet sein. Zudem kann bei einer Lackierkabine ein Druckraum an der Decke angeordnet sein, über den konditionierte Luft zum Abführen von Overspray, also von Lack, der nicht auf die Zwischenwerkstücke 26 gelangen soll, von oben nach unten durch den Behandlungstunnel geblasen werden kann. Die dann mit Overspray beladene Luft kann dann durch einen strömungsdurchlässigen Tunnelboden in einen darunter liegenden Kabinenbereich gelangen, in dem eine nicht eigens gezeigte Abscheidevorrichtung durchströmt werden kann, um den Overspray von der Kabinenluft zu trennen, wie es an und für sich bekannt ist.

In allen beschriebenen Arbeitszonen 24 sind Notaus-Taster 73, die Teil einer Sicherheitssteuerung 74 sind, vorhanden, die manuell von einem Werker 75 betätigt werden können, wenn eine Not- oder Gefahrensituation in einer bestimmten Arbeitszone 24 erkannt wird.

Nachfolgend werden nun das erfindungsgemäße Verfahren zum Betreiben einer Fertigungsanlage 10 sowie die entsprechenden strukturellen Merkmale der Fertigungsanlage 10 anhand der **Figuren 1 bis 10** näher beschrieben.

Die Sicherheitssteuerung 74 der Fertigungsanlage 10 umfasst, wie **Figur 1** zeigt, vorliegend eine Datenverarbeitungseinrichtung 76, in welcher für jede Arbeitszone 24, d.h. vorliegend für die Arbeitszonen 16.i, 18.i, 20.i und 22.i, Ist-Betriebssignale abgespeichert sind. Diese Ist-Betriebssignale stehen vorliegend jeweils für die Freigabe eines Standardbetriebsmodus in einer bestimmten Arbeitszone 24. In den Speichermodulen 50 der fahrerlosen Transportwagen 32 sind Soll-Betriebsdaten abgespeichert, die ebenfalls für jede Arbeitszone 24 individuell sind.

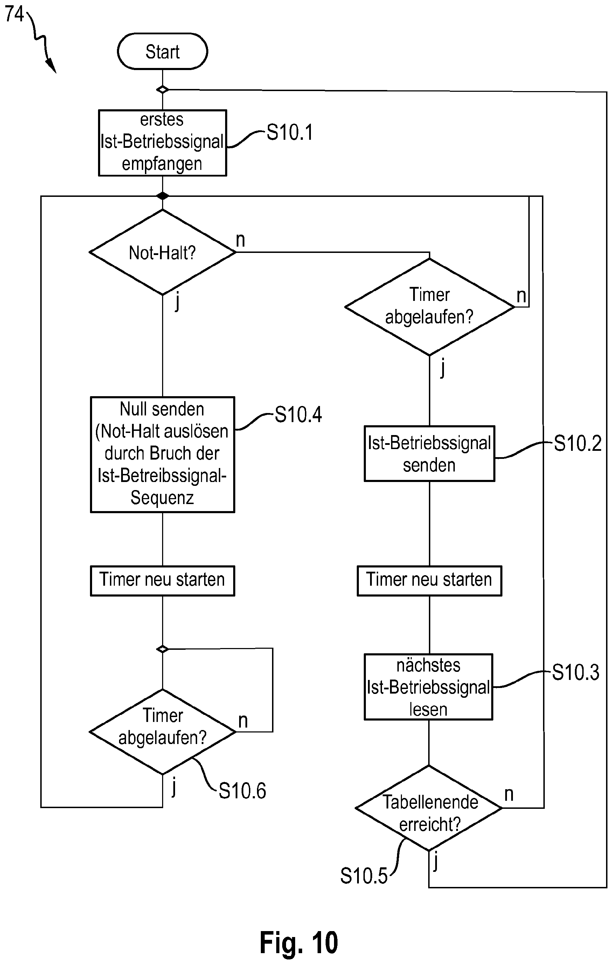

Die Sicherheitssteuerung 74 ist dazu eingerichtet, für jede Arbeitszone 24 individuelle und kontinuierliche Ist-Betriebssignale an die jeweiligen Steuereinheiten 46 der fahrerlosen Transportwagen 32 zu senden (S10.1; **Figur 10**). Hierfür weist die Sicherheitssteuerung 74 vorliegend eine Signaleinrichtung 78 auf. Ein kontinuierliches Ist-Betriebssignal kann einerseits ein Dauersignal und andererseits eine Abfolge von Signalpaketen sein, die in zeitlichen Abständen gesendet werden (S10.1 und S10.2; **Figur 10**).

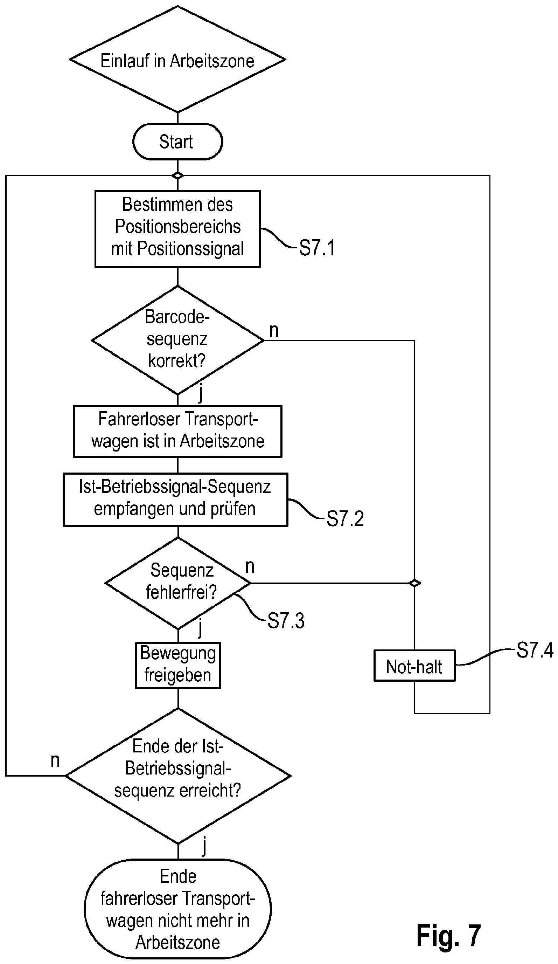

Beim vorliegenden Ausführungsbeispiel empfangen die Steuereinheiten 46 der fahrerlosen Transportwagen 32 die Ist-Betriebssignale (S7.2; S8.1 und S9.2; **Figuren 7 bis 9**). Bei nicht eigens dargestellten Ausführungsbeispielen können die Steuereinheiten 46 den Empfang der Ist-Betriebssignale auch überprüfen (S7.2; S8.1). Bei weiteren, nicht eigens gezeigten Ausführungsbeispielen kann die Überprüfung auch durch das Steuersystem 56 erfolgen, die hierfür eine eigene Datenverarbeitungseinrichtung aufweisen kann.

Wenn eine Abweichung zwischen zumindest einem für den Vergleich relevanten Teil eines empfangenen Ist-Betriebssignals einer Arbeitszone 24 und zumindest einem für den Vergleich relevanten Teil eines in einem Speichermodul 50 eines fahrerlosen Transportwagens 32 abgespeicherten Soll-Betriebswerts festgestellt wird, löst vorliegend beispielsweise die Sicherheitssteuerung 74 einen Sonderbetriebsmodus der fahrerlosen Transportwagen 32 in der entsprechenden Arbeitszone 24 aus (S7.3, S7.4; S8.3, S8.4; S9.2, S9.5, S9.7; S10.4; **Figuren 7 bis 10**).

Der Sonderbetriebsmodus der fahrerlosen Transportwagen 32 kann bei nicht eigens dargestellten Ausführungsbeispielen auch durch das Steuersystem 56 ausgelöst werden. Bei weiteren, nicht eigens dargestellten Ausführungsbeispielen, kann auch die Steuereinheit 46 eines fahrerlosen Transportwagens 32 denjenigen fahrerlosen Transportwagen 32 in den Sonderbetriebsmodus versetzen, bei welchem die Abweichung zwischen dem Ist-Betriebssignal und dem Soll-Betriebswert festgestellt wurde, und danach ein Sonderbetriebs-Signal an die sich ebenfalls in der Arbeitszone 24 befindenden fahrerlosen Transportwagen 32 senden, sodass diese ebenfalls in den Sonderbetriebsmodus übergehen.

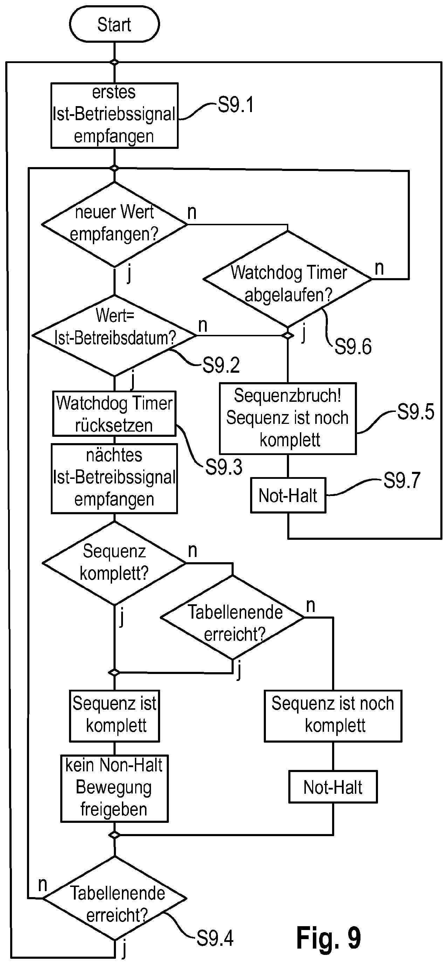

Eine Abweichung kann vorliegen, wenn einerseits der Empfang des Ist-Betriebssignals innerhalb eines erwarteten Zeitabstandes ausbleibt (S9.6; **Figur 9**) oder wenn andererseits zumindest der für den Vergleich relevante Teil des Ist-Betriebssignals nicht mit dem zumindest für den Vergleich relevanten Teil des Soll-Betriebswerts (S7.3; S8.3; S9.2; **Figuren 7 bis 9**) übereinstimmt. Für das Überwachen des Zeitabstandes können die Steuereinheiten 46 der fahrerlosen Transportwagen jeweils einen Timer aufweisen, der in den Figuren als Watchdog-Timer bezeichnet ist.

Bei dem vorliegenden Ausführungsbeispiel liegen die Ist-Betriebssignale in einer Ist-Betriebssignal-Sequenz vor, die sich zyklisch wiederholt. Konkret bedeutet dies beim vorliegenden Ausführungsbeispiel, dass die Sequenz der Ist-Betriebssignale von vorne beginnt, nachdem das Ende der Ist-Betriebssignal-Sequenz erreicht wurde (S9.4; S10.5; **Figuren 9** **und** **10**). Bei Ist-Betriebssignalen und bei Soll-Betriebsdaten, die in Datenpaketen vorliegen, bezieht sich die zyklische Wiederholung der Sequenz auf die jeweils zumindest für den Vergleich relevanten Teile der Ist-Betriebssignale und der Soll-Betriebsdaten. Hierdurch wird erreicht, dass die zumindest für den Vergleich relevanten Teile der Soll-Betriebsdaten sowie der Ist-Betriebssignale für die jeweilige Arbeitszone 24 stets gleichbleiben, ein Zugriff von extern auf die Kommunikation zwischen der Sicherheitssteuerung 74 und den Steuereinheiten 46 der fahrerlosen Transportwagen 32 aber erschwert ist.

Vorliegend werden die Ist-Betriebssignale von der Sicherheitssteuerung 74 in vordefinierten Zeitabständen an die Steuereinheiten 46 der fahrerlosen Transportwagen 32 übermittelt. Dementsprechend sind die Steuereinheiten 46 der fahrerlosen Transportwagen 32 derart eingerichtet, dass diese innerhalb des vordefinierten Zeitabstandes plus einer gewissen Übermittlungslatenz das nächste Ist-Betriebssignal der Sicherheitssteuerung 74 erwarten. Sofern dieses nicht innerhalb der Übermittlungslatenz von den Steuereinheiten 46 empfangen wurde, gehen die fahrerlosen Transportwagen 32 in einer entsprechenden Arbeitszone 24 in den Sonderbetriebsmodus über (S9.5, S9.6 und S9.7; **Figur 9**).

Die Steuereinheiten 46 der fahrerlosen Transportwagen 32, das Steuersystem 56 und/oder die Sicherheitssteuerung 74 können derart eingerichtet sein, dass die Steuereinheiten 46 der fahrerlosen Transportwagen 32 wieder in den Standardbetriebsmodus für die fahrerlosen Transportwagen 32 übergehen, sobald die Ist-Betriebssignal-Sequenz vollständig gesendet, empfangen und mit den Soll-Betriebsdaten, die ebenfalls in einer Soll-Betriebsdaten-Sequenz vorliegen, verglichen wurde. Vorliegend wird dies durch die Sicherheitssteuerung 74 ausgeführt (S10.6; **Figur 10**). Abhängig von der Länge der vordefinierten Zeitabstände hält dann der Sonderbetriebsmodus kürzer oder länger an.

Um die Sicherheit innerhalb der Fertigungsanlage 10 zu erhöhen, sind beim vorliegenden Ausführungsbeispiel die Ist-Betriebssignale und die Soll-Betriebsdaten für jede Arbeitszone 24 zufällig generiert und entsprechen einander. Ein "einander entsprechen" meint in diesem Zusammenhang, dass jedem zumindest für den Vergleich relevanten Teil der Ist-Betriebssignale ein entsprechender für den Vergleich relevanter Teil der Soll-Betriebsdaten zugeordnet ist. Beispielsweise können die Soll-Betriebsdaten durch eine Umrechnung der Ist-Betriebssignale erhalten werden, beispielsweise mittels eines kryptographischen Verschlüsselungsalgorithmus.

Da eine solche Umrechnung allerdings auch für derartige Fertigungsanlagen 10 eine gewisse Zeit in Anspruch nimmt und gegebenenfalls spezielle Soft- und/oder Hardware erfordert, sind die Soll-Betriebsdaten vorliegend identisch mit den Ist-Betriebssignalen, sodass ein einfacher Abgleich auf die Identität des gesendeten Ist-Betriebssignals mit dem gespeicherten Soll-Betriebswert vorliegend ausreichend ist (S9.2; **Figur 9**).

Sobald der Sonderbetriebsmodus bei den fahrerlosen Transportwagen 32 in einer Arbeitszone 24 ausgelöst wurde, führen die fahrerlosen Transportwagen 32 vorliegend einen abrupten Not-Halt aus. Beispielsweise dann, wenn ein Werker 75 zwischen zwei fahrerlosen Transportwagen 32 und/oder zwischen den transportierten Werkstücken 12 eingeklemmt wird, ist ein Not-Halt erforderlich, um gravierendere Verletzungen beim Werker 75 möglichst zu vermeiden.

Eine Veränderung der Ist-Betriebssignale oder eine Unterbrechung des Sendens der Ist-Betriebssignale kann beispielsweise durch das manuelle Betätigen eines Sonderbetriebsschalters, vorliegend in Form eines Notaus-Tasters 73, bewirkt werden. Infolge der Betätigung kann von einem mit dem Notaus-Taster 73 gekoppelten Sender, der nicht eigens dargestellt ist, ein Notaus-Signal an die Sicherheitssteuerung 74 übermittelt werden, die daraufhin beispielsweise den nächsten Wert in der Ist-Betriebssignal-Sequenz auf "0" setzt (S10.4; **Figur 10**), was wiederum nach Empfang durch die Steuereinheiten 46 der fahrerlosen Transportwagen 32 den Sonderbetriebsmodus und damit den Not-Halt auslöst.

Möglich ist darüber hinaus in anderen Ausführungsbeispielen aber auch, dass ein entsprechendes Notaus-Signal von der Steuereinheit 46 eines fahrerlosen Transportwagens 32 übermittelt wird, wenn sich im Sensorfeld des fahrerlosen Transportwagens 32 beispielsweise ein Hindernis befindet. Der relevante Sensorparameter, der zum Auslösen des Notaus-Signals an die Sicherheitssteuerung 74 übermittelt wird, wird vorliegend als Auslöseparamter bezeichnet.

Neben einem Not-Halt kann der Sonderbetriebsmodus bei nicht eigens gezeigten Ausführungsbeispielen auch eine Geschwindigkeitsreduktion, eine Beschleunigungsreduktion und/oder eine Änderung der Förderrichtung der fahrerlosen Transportwagen 32 umfassen.

Der Sonderbetriebsmodus wird in erster Linie nur in der Arbeitszone 24 ausgelöst, für welche das gesendete Ist-Betriebssignal gegenüber dem entsprechenden Soll-Betriebswert abweicht. Es kann bei nicht eigens dargestellten Ausführungsbeispielen aber auch der Fall sein, dass mehrere Arbeitszonen 24 in einer Art miteinander gekoppelt sind, dass in allen gekoppelten Arbeitszonen 24 der Sonderbetriebsmodus ausgelöst wird, sofern von den Steuereinheiten 46 der fahrerlosen Transportwagen 32 in einer "auslösenden" Arbeitszone 24 eine Abweichung festgestellt wird.

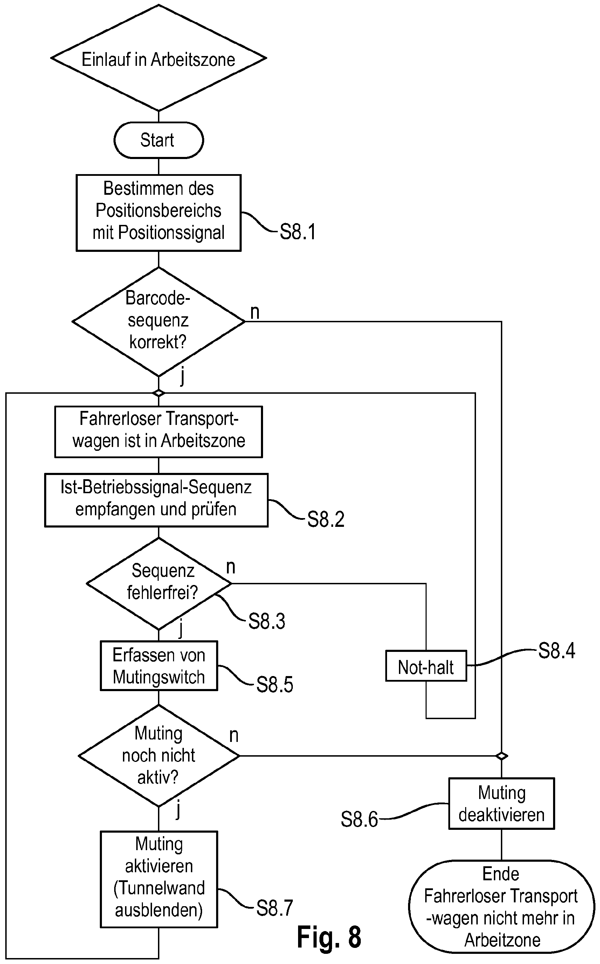

Damit sowohl dem Steuersystem 56 als auch der Sicherheitssteuerung 74 stets bekannt ist, in welchen Arbeitszonen 24 sich zu jedem Zeitpunkt die fahrerlosen Transportwagen 32 aufhalten, wird vorliegend durch die von den fahrerlosen Transportwagen 32 mit sich geführten Sensoreinrichtungen 48 ein eindeutiges Positionssignal 62 ausgelesen (S7.1; S8.1; **Figuren 7** **und** **8**) und durch das Steuersystem 56 sowie die Sicherheitssteuerung 74 erfasst, in welcher Arbeitszone 24 sich die fahrerlosen Transportwagen 32 befinden.

Die Positionssignale 62 befinden sich vorliegend jeweils an Eingängen 80 und an nicht eigens dargestellten Ausgängen der Arbeitszonen 24. Bei nicht eigens dargestellten Ausführungsbeispielen kann es aber auch ausreichend sein, jeweils nur an den Eingängen 80 oder den Ausgängen Positionssignale 62 vorzusehen.

Die Positionssignale 62 setzen sich vorliegend aus zwei Einzelsignalen 84 zusammen, die in serieller Abfolge jeweils das eindeutige Positionssignal 62 ergeben. In diesem Zusammenhang wird auch von der sogenannten seriellen Redundanz gesprochen, die beispielsweise von einer Parallelredundanz mit zwei Sensoren zu unterscheiden ist. Die Einzelsignale 84 sind vorliegend als Barcodes 84a ausgebildet, die 6 Stellen aufweisen. Es können aber auch andere Informationsträger, beispielsweise QR-Codes oder RFID-Chips verwendet werden. Ebenso können weniger oder mehr Stellen in den Barcodes vorhanden sein. Beim vorliegenden Ausführungsbeispiel besteht jedenfalls eine Wahrscheinlichkeit von 10⁻¹², versehentlich an zwei Positionen die identische Abfolge von Barcodes 84a vorzusehen.

Nachdem das eindeutige Positionssignal 62 erfasst wurde, wird dieses an das Steuersystem 56 oder die Sicherheitssteuerung 74 übermittelt. Danach wird vorliegend durch das Steuersystem 56 oder die Sicherheitssteuerung 74 ein Positionsbereich für jeden sich in einer Arbeitszone 24 befindenden fahrerlosen Transportwagen 32 ermittelt.

Um einen ortsspezifischen Kommunikationskanal zwischen den fahrerlosen Transportwagen 32 und der Sicherheitssteuerung 74 auszubilden, durchfahren die fahrerlosen Transportwagen 32 beim vorliegenden Ausführungsbeispiel an den Eingängen 80 jeder Arbeitszone 24 einen als Lichtgitter ausgebildeten Kanalswitch 86. Vorliegend registrieren die fahrerlosen Transportwagen 32 mittels ihrer Sensoreinrichtungen 48, dass sie das Lichtgitter durchfahren haben, woraufhin die Steuereinheiten 46 der fahrerlosen Transportwagen 32 den ortsspezifischen Kommunikationskanal aufbauen. Der Kanalswitch 86 kann auch bspw. als Funkgitter oder als mechanischer Schalter ausgebildet sein, das bzw. der durch- bzw. überfahren wird, um einen ortsspezifischen Kommunikationskanal auszubilden.

Bei nicht eigens dargestellten Ausführungsbeispielen können nach Art einer steuerungstechnischen Umkehr auch die Kanalswitche registrieren, dass sie von einem fahrerlosen Transportwagen 32 durchfahren wurden und ein entsprechendes Freigabesignal an die Sicherheitssteuerung 74 übermitteln, die daraufhin einen ortsspezifischen Kommunikationskanal mit den fahrerlosen Transportwagen 32 ausbildet.

Vorliegend wird mit dem Aufbau des ortsspezifischen Kommunikationskanals der Schritt des Vergleichens der empfangenen Ist-Betriebssignale mit den in den Speichermodulen der fahrerlosen Transportwagen 32 bereitgestellten Soll-Betriebsdaten eingeleitet.

Ferner sind die fahrerlosen Transportwagen 32 vorliegend derart eingerichtet, dass die von den Sensoreinrichtungen 48 erzeugten Sensorfelder jeweils an den Eingängen 80 der Arbeitszonen 24 mittels Erfassens eines in Form eines Musters oder einer Kontur ausgebildeten Mutingswitches 88 gemutet werden (S8.5, S8.7; **Figur 8**). Das Muting erfolgt in einer Art und Weise, dass gegebenenfalls vorhandene Wände eines Fahrraumgehäuses 68 von den Sensoreinrichtungen 48 nicht als Hindernis erkannt werden und somit auch nicht unerwünscht in den Sonderbetriebsmodus übergegangen wird. Beim erneuten Erfassen eines Mutingswitches 88, beispielsweise an den Ausgängen der Arbeitszonen 24, wird das Muting wieder deaktiviert (S8.6; **Figur 8**).

Vorliegend sind die fahrerlosen Transportwagen 32 als Mesh-Knotenpunkte 90 für ein anlagenumspannendes Mesh-W-LAN-Netzwerk 92 ausgebildet. Vorliegend werden Mesh-Knotenpunkte 90 als Punkte innerhalb des W-LAN-Netzwerks 94 verstanden, die das von einer nicht eigens mit einem Bezugszeichen versehenen W-LAN-Zentrale erzeugte W-LAN verstärken oder ein separates W-LAN erzeugen. Innerhalb des Mesh-W-LAN-Netzwerkes 92 werden gitterartig erzeugte W-LAN-Bereiche zu einem gemeinsamen anlagenumspannenden W-LAN-Netzwerk 94 zusammengefasst. Hierdurch wird erreicht, dass die gesamte Fertigungsanlage weitestgehend homogen von dem Funknetz erreicht wird, wodurch eine weitestgehend homogene Übertragungsgeschwindigkeit von Daten, insbesondere der Ist-Betriebssignale, in dem W-LAN-Netzwerk 94 erreicht wird.

In Verbindung mit einem zufälligen Generieren der Ist-Betriebssignal-Sequenz sowie der Soll-Betriebsdaten-Sequenz wird somit aus einem an sich vergleichsweise unsicheren Netzwerk mittels der Art des Kommunikationsweges zwischen der Sicherheitssteuerung 74 und den Steuereinheiten 46 der fahrerlosen Transportwagen 32 ein vergleichsweise sicheres Netzwerk geschaffen.

## Patentansprüche

1. Verfahren zum Betreiben einer Fertigungsanlage (10) zur Herstellung von Werkstücken (12), insbesondere von Fahrzeugen (14), welches die folgenden Schritte umfasst:
a) Durchführen von Arbeitsschritten zur Herstellung der Werkstücke (12) an sich in verschiedenen Produktionsstadien befindenden Zwischenwerkstücken (26) in mehreren Arbeitszonen (24) der Fertigungsanlage (10);
b) Fördern der Zwischenwerkstücke (26) durch die Arbeitszonen (24) mittels eines fahrerlosen Transportsystems (FTS; 30), das mehrere fahrerlose Transportwagen (32) umfasst, wobei jeder fahrerlose Transportwagen (32) eine Antriebseinrichtung (44), eine Steuereinheit (46), eine Sensoreinrichtung (48), ein Speichermodul (50) und eine Energieversorgungseinrichtung (52) mit sich führt, wobei die Sensoreinrichtung (48) ein den fahrerlosen Transportwagen (32) umgebendes Sensorfeld erzeugt (S2);
c) Koordinieren des Förderbetriebs der fahrerlosen Transportwagen (32) in der Fertigungsanlage (10) mittels eines Steuersystems (56), das hierfür Steuersignale an die Steuereinheiten (46) der fahrerlosen Transportwagen (32) sendet;
**gekennzeichnet durch** die folgenden weiteren Schritte:
d) Bereitstellen von für jede Arbeitszone (24) individuellen Soll-Betriebsdaten in den Speichermodulen (50) der fahrerlosen Transportwagen (32);
e) Senden von für jede Arbeitszone (24) individuellen und kontinuierlichen Ist-Betriebssignalen an die jeweiligen Steuereinheiten (46) der fahrerlosen Transportwagen (32) durch eine Sicherheitssteuerung (74; S10.1);
f) Empfangen der Ist-Betriebssignale und Vergleichen der empfangenen Ist-Betriebssignale mit den in den Speichermodulen (50) bereitgestellten Soll-Betriebsdaten (S7.2; S8.2; S9.1, S9.2),
wobei
g) bei einer Abweichung zwischen einem für den Vergleich relevanten Teil des empfangenen Ist-Betriebssignals einer Arbeitszone (24) und einem für den Vergleich relevanten Teil des entsprechenden abgespeicherten Soll-Betriebswerts ein Sonderbetriebsmodus der fahrerlosen Transportwagen (32) in der entsprechenden Arbeitszone (24) ausgelöst wird (S7.3; S8.3; 9.2; S10.4).

2. Verfahren nach Anspruch 1, **dadurch gekennzeichnet, dass** die Ist-Betriebssignale in einer Ist-Betriebssignal-Sequenz vorliegen, die sich zyklisch wiederholt (S9.4; S10.5).

3. Verfahren nach Anspruch 1 oder 2, **dadurch gekennzeichnet, dass** die Ist-Betriebssignale in vordefinierten Zeitabständen an die Steuereinheiten (50) der fahrerlosen Transportwagen (24) gesendet werden (S10.1, S10.2, S10.3), wobei die Zeitabstände in einem Bereich von 50 ms bis 1000 ms, insbesondere von 75 ms bis 500 ms, insbesondere 100 ms bis 250 ms liegen.

4. Verfahren nach einem der vorhergehenden Ansprüche, **dadurch gekennzeichnet, dass** die Ist-Betriebssignale und/oder die Soll-Betriebsdaten für jede Arbeitszone (24) zufällig generiert sind und einander entsprechen.

5. Verfahren nach Anspruch 4 mit Rückbezug auf Anspruch 2, **dadurch gekennzeichnet, dass** die Soll-Betriebsdaten in einer Soll-Betriebsdaten-Sequenz vorliegen und die Soll-Betriebsdaten-Sequenz identisch mit der Ist-Betriebssignal-Sequenz ist (S9.2).

6. Verfahren nach einem der vorhergehenden Ansprüche, **dadurch gekennzeichnet, dass** der Sonderbetriebsmodus einen abrupten Not-Halt (S7.4; S8.4; S9.7) oder eine Geschwindigkeitsänderung, insbesondere eine Geschwindigkeitsreduktion, und/oder eine Beschleunigungsänderung, insbesondere eine Beschleunigungsreduktion, und/oder eine Änderung einer Förderrichtung der fahrerlosen Transportwagen (32) in einer oder mehreren der Arbeitszonen (24) umfasst.

7. Verfahren nach einem der vorhergehenden Ansprüche, **dadurch gekennzeichnet, dass** der Sonderbetriebsmodus der fahrerlosen Transportwagen (32) in einer bestimmten Arbeitszone (24)
- selbsttätig durch die Sicherheitssteuerung (74) in Reaktion auf einen vorgegebenen Auslöseparameter oder
- manuell durch das Betätigen eines Sonderbetriebsschalters (73)
ausgelöst wird.

8. Verfahren nach einem der vorhergehenden Ansprüche, **dadurch gekennzeichnet, dass** das Verfahren den folgenden weiteren Schritt umfasst:
- Erfassen, in welchen Arbeitszonen (24) sich die fahrerlosen Transportwagen (32) befinden, mittels insbesondere der von den fahrerlosen Transportwagen (32) jeweils mit sich geführten Sensoreinrichtungen (48), die hierzu jeweils ein eindeutiges Positionssignal (62) auslesen (S7.1; S8.1).

9. Verfahren nach Anspruch 8, **dadurch gekennzeichnet, dass** sich die Positionssignale (62) jeweils aus mindestens zwei Einzelsignalen (84, 84a) zusammensetzen, die erst in serieller Abfolge das eindeutige Positionssignal (62) ergeben.

10. Verfahren nach Anspruch 9, **dadurch gekennzeichnet, dass** das Verfahren die folgenden weiteren Schritte umfasst:
- Übermitteln der eindeutigen Positionssignale (62) an das Steuersystem (56) oder die Sicherheitssteuerung (74);
- Ermitteln eines eindeutigen Positionsbereiches für jeden sich in einer Arbeitszone (24) befindenden fahrerlosen Transportwagen (32).

11. Verfahren nach einem der Ansprüche 8 bis 10, **dadurch gekennzeichnet, dass** die eindeutigen Positionssignale (62) zumindest an Eingängen (80) und an Ausgängen der Arbeitszonen (24) ausgelesen werden.

12. Verfahren nach einem der vorhergehenden Ansprüche, **dadurch gekennzeichnet, dass** an einem Eingang (80) jeder Arbeitszone (24) zwischen den fahrerlosen Transportwagen (32) und der Sicherheitssteuerung (74) mittels Durch- oder Überfahrens oder Erfassens eines Kanalswitches (86), insbesondere in Form eines Gitters elektromagnetischer Strahlung, insbesondere eines Lichtgitters, durch die fahrerlosen Transportwagen (32) jeweils ein ortsspezifischer Kommunikationskanal aufgebaut wird.

13. Verfahren nach Anspruch 12, **dadurch gekennzeichnet, dass** mit dem Aufbau des Kommunikationskanals der Schritt des Vergleichens der empfangenen Ist-Betriebssignale mit den in den Speichermodulen (50) der fahrerlosen Transportwagen (32) bereitgestellten Soll-Betriebsdaten eingeleitet wird.

14. Verfahren nach einem der vorhergehenden Ansprüche, **dadurch gekennzeichnet, dass** die Sensorfelder der fahrerlosen Transportwagen (32) jeweils an einem Eingang (80) jeder Arbeitszone (24) mittels Durch- oder Überfahrens oder Erfassens eines Mutingswitches (88), insbesondere in Form eines von den Sensoreinrichtungen (48) der fahrerlosen Transportwagen (32) auslesbaren Mutingsignals, insbesondere eines Musters und/oder einer Kontur, zumindest bereichsweise gemutet werden (S8.5, S8.7).

15. Fertigungsanlage zur Herstellung von Werkstücken (12), insbesondere von Fahrzeugen (14), mit
a) mehreren Arbeitszonen (24), in denen zur Herstellung der Werkstücke (12) erforderliche Arbeitsschritte an sich in verschiedenen Produktionsstadien befindenden Zwischenwerkstücken (26) durchgeführt werden können;
b) einem fahrerlosen Transportsystem (FTS; 30), das mehrere fahrerlose Transportwagen (32) umfasst, mittels denen die Zwischenwerkstücke (26) durch die Arbeitszonen (24) förderbar sind, wobei jeder Transportwagen (32) eine Antriebseinrichtung (44), eine Steuereinheit (46), eine Sensoreinrichtung (48), ein Speichermodul (50) und eine Energieversorgungseinrichtung (52) mit sich führt, wobei die Sensoreinrichtung (48) ein den fahrerlosen Transportwagen (32) umgebendes Sensorfeld erzeugen kann;
c) einem Steuersystem (56), das den Betrieb der fahrerlosen Transportwagen (32) in der Fertigungsanlage (10) koordinieren und das zu diesem Zweck Steuersignale an die Steuereinheiten (50) der fahrerlosen Transportwagen (32) senden kann;
**dadurch gekennzeichnet, dass**
d) in den Speichermodulen (50) der fahrerlosen Transportwagen (32) für jede Arbeitszone (24) individuelle Soll-Betriebsdaten abgespeichert sind;
e) eine Sicherheitssteuerung (74) vorhanden ist, die derart konfiguriert ist, dass diese für jede Arbeitszone (24) individuelle und kontinuierliche Ist-Betriebssignale an die jeweiligen Steuereinheiten (50) der fahrerlosen Transportwagen sendet (32);
f) die jeweilige Steuereinheit (46) eines fahrerlosen Transportwagens (32) derart eingerichtet ist, dass diese die Ist-Betriebssignale empfängt und empfangene Ist-Betriebssignale mit den in den Speichermodulen (50) abgespeicherten Soll-Betriebsdaten vergleicht;
wobei
g) die Steuereinheiten (46) jeweils derart eingerichtet sind, dass diese bei einer Abweichung zwischen zumindest einem für den Vergleich relevanten Teil eines empfangenen Ist-Betriebssignals und zumindest einem für den Vergleich relevanten Teil eines entsprechenden abgespeicherten Soll-Betriebswerts einen Sonderbetriebsmodus der fahrerlosen Transportwagen (32) in der entsprechenden Arbeitszone (24) auslösen.

16. Fertigungsanlage nach Anspruch 15, **dadurch gekennzeichnet, dass** die Ist-Betriebssignale in einer Ist-Betriebssignal-Sequenz vorliegen, die zyklisch wiederholbar ist.

17. Fertigungsanlage nach Anspruch 15 oder 16, **dadurch gekennzeichnet, dass** die Sicherheitssteuerung (74) derart eingerichtet ist, dass diese die Ist-Betriebssignale in vordefinierten Zeitabständen an die Steuereinheiten (46) der fahrerlosen Transportwagen (32) sendet, wobei die Zeitabstände in einem Bereich von 50 ms bis 1000 ms, insbesondere von 75 ms bis 500 ms, insbesondere von 100 ms bis 250 ms liegen.

18. Fertigungsanlage nach einem der Ansprüche 15 bis 17, **dadurch gekennzeichnet, dass** die Ist-Betriebssignale und/oder die Soll-Betriebsdaten für jede Arbeitszone (24) zufällig generiert sind und einander entsprechen.

19. Fertigungsanlage nach Anspruch 18 mit Rückbezug auf Anspruch 16, **dadurch gekennzeichnet, dass** die Soll-Betriebsdaten in einer Soll-Betriebsdaten-Sequenz vorliegen und die Soll-Betriebsdaten-Sequenz identisch mit der Ist-Betriebssignal-Sequenz ist.

20. Fertigungsanlage nach einem der Ansprüche 15 bis 19, **dadurch gekennzeichnet, dass** der Sonderbetriebsmodus einen abrupten Not-Halt oder eine Geschwindigkeitsänderung, insbesondere eine Geschwindigkeitsreduktion, und/oder eine Beschleunigungsänderung, insbesondere eine Beschleunigungsreduktion, und/oder eine Änderung der Förderrichtung der fahrerlosen Transportwagen (32) in einer oder mehreren der Arbeitszonen (24) umfasst.

21. Fertigungsanlage nach einem der Ansprüche 15 bis 20, **dadurch gekennzeichnet, dass** der Sonderbetriebsmodus der fahrerlosen Transportwagen (32) in einer bestimmten Arbeitszone (24)
- selbsttätig durch die Sicherheitssteuerung (74) in Reaktion auf einen vorgegebenen Auslöseparameter oder
- manuell durch das Betätigen eines Sonderbetriebsschalters
ausgelöst werden kann.

22. Fertigungsanlage nach einem der Ansprüche 15 bis 21, **dadurch gekennzeichnet, dass** mittels der von den fahrerlosen Transportwagen (32) jeweils mit sich geführten Sensoreinrichtungen (48) durch Auslesen eines eindeutigen Positionssignals (62) erfasst werden kann, in welchen Arbeitszonen (24) sich die fahrerlosen Transportwagen (32) befinden.

23. Fertigungsanlage nach Anspruch 22, **dadurch gekennzeichnet, dass** sich die Positionssignale (62) aus mindestens zwei Einzelsignalen (84) zusammensetzen, derart, dass diese erst in serieller Abfolge das eindeutige Positionssignal (62) ergeben.

24. Fertigungsanlage nach Anspruch 23, **dadurch gekennzeichnet, dass** von den Steuereinheiten (46) der fahrerlosen Transportwagen (32) das eindeutige Positionssignal (62) an das Steuersystem (56) übermittelt werden und vom Steuersystem (56) ein eindeutiger Positionsbereich für jeden sich in einer Arbeitszone (24) befindenden fahrerlosen Transportwagen (32) ermittelt werden kann.

25. Fertigungsanlage nach einem der Ansprüche 22 bis 24, **dadurch gekennzeichnet, dass** die eindeutigen Positionssignale (62) zumindest an Eingängen (80) und an Ausgängen (82) der Arbeitszonen (24) angeordnet sind.

26. Fertigungsanlage nach einem der Ansprüche 15 bis 26, **dadurch gekennzeichnet, dass** an einem Eingang (80) jeder Arbeitszone (24) ein Kanalswitch (86) angeordnet ist, insbesondere in Form eines Gitters einer elektromagnetischen Strahlung, insbesondere eines Lichtgitters, der von den fahrerlosen Transportwagen (32) durch- oder überfahren oder erfasst werden kann, derart, dass zwischen den fahrerlosen Transportwagen (32) und der Sicherheitssteuerung (74) ein ortsspezifischer Kommunikationskanal aufgebaut wird.

27. Fertigungsanlage nach einem der Ansprüche 15 bis 26, **dadurch gekennzeichnet, dass** an einem Eingang (80) jeder Arbeitszone (24) ein Mutingswitch (88) angeordnet ist, insbesondere in Form eines von den Sensoreinrichtungen (48) der fahrerlosen Transportwagen (32) auslesbaren Mutingsignals, insbesondere eines Musters und/oder einer Kontur, der von den fahrerlosen Transportwagen (32) durch- oder überfahren oder erfasst werden kann, derart, dass die Sensorfelder der fahrerlosen Transportwagen (32) jeweils zumindest bereichsweise gemutet werden.

28. Fertigungsanlage nach einem der Ansprüche 15 bis 27, **dadurch gekennzeichnet, dass** die fahrerlosen Transportwagen (32) als Mesh-Knotenpunkte (90) für ein anlagenumspannendes Mesh-W-LAN-Netzwerk (92) ausgebildet sind.
